# EUROPEAN PATENT SPECIFICATION

(11) **EP 0 977 710 B1**
(45) Date of publication and mention of the grant of the patent: **04.07.2001**
(21) Application number: 98919363.6
(22) Date of filing: 30.04.1998
(51) Int. Cl.: C01B 37/00

(54) **ACTINIDE-CONTAINING MOLECULAR SIEVES**
ACTINID ENTHALTENDE MOLEKULARSIEBE
TAMIS MOLECULAIRES CONTENANT DE L'ACTINIDE

(30) Priority: 01.05.1997 GB 9708907; 07.05.1997 GB 9709192; 20.01.1998 GB 9801091; 20.01.1998 GB 9801097
(43) Date of publication of application: 09.02.2000
(73) Proprietor: British Nuclear Fuels PLC, Risley Warrington Cheshire, WA3 6AS (GB)
(72) Inventor: LEE, Darren, Frank British Nuclear Fuels plc, Salwick Preston, Lancashire PR4 0XJ (GB); O'HARE, Dermot, Oxfordshire 0X1 3TN (GB); FRANCIS, Robin, Oxford Oxfordshire 0X1 3QR (GB)
(74) Representative: Harrison Goddard Foote
(86) International application number: GB9801275
(87) International publication number: WO9850307

(56) References cited:
- EP-A- 0 181 764
- EP-A- 0 670 286

## Description

### BACKGROUND OF THE INVENTION

### 1. Field of the Invention

This invention relates to actinide-containing molecular sieve materials and more particularly to microporous and mesoporous materials containing an ionic actinide material. The actinide is preferably uranium.

A molecular sieve, i.e. a material which is porous at the molecular level, has a three dimensional open framework providing cages or pores or, alternatively, gaps between adjacent layers. Depending upon the pore size or the interlayer spacing, molecular sieves are categorised into three groups: (1) microporous materials having a pore size or interlayer spacing of less than 20Å; (2) mesoporous materials having a pore size or interlayer spacing of from 20Å to 50Å; and (3) macroporous materials having a pore size or interlayer spacing of greater than 50Å. For convenience, however, molecular sieve materials are sometimes referred to as "microporous" even though they may have a pore size or interlayer spacing of more than 20Å. Thus, the term "microporous" should not in all contexts be interpreted as being restricted to materials having a pore size or interlayer spacing of less than 20Å.

### 2. Brief Description of the Related Art

Intense interest, both academic and industrial, in the synthesis of new open framework materials (e.g. microporous materials) has stemmed from their great utility as catalysts, sorbents, ion-exchange reagents and as host materials for inclusion complexes (P B Venuto *Microporous Mater.* 1994, 2, 297). This has stimulated the search for new materials with novel layered and open-framework structures. Following the synthesis of microporous aluminophosphates in 1982, much interest has focused on the synthesis of other microporous metal phosphates. Research into the synthesis of metal phosphates has been driven by three main potential advantages that they have over aluminosilicate zeolites. Firstly, the ability of main group and transition metals to exist in five, six, seven or higher co-ordination environments, as opposed to zeolites and aluminophosphates which only contain tetrahedrally co-ordinated units, allows the synthesis of new more complex framework architectures. Secondly, the sheer number of different possible elements that may be incorporated into a phosphate framework means the potential for the synthesis of new materials is huge. Finally, the incorporation of transition metals capable of existing in a variety of different oxidation states within an open-framework structure offers the possibility of combining the shape-selectivity of zeolites with the catalytic, magnetic and photo-chemical properties associated with d-block elements. These potential advantages have led many groups to study the synthesis of these materials over recent years, and a vast number of different metals have been incorporated into microporous phosphate frameworks, including Be, Ga, In, Mo, V, Zn, Co, and Fe. Many of these materials have unusual structures and properties.

Molecular sieve materials are generally synthesised under hydrothermal conditions in the presence of organic molecules which act as templates in the crystal growth process (see R M Barrer, "Hydrothermal Chemistry of Zeolites", Academic Press, 1982).

### SUMMARY OF THE INVENTION

The present invention relates to molecular sieves and in particular (but not exclusively) to such materials which would be described as microporous or mesoporous according to the system of nomenclature explained above.

Specifically, the invention provides molecular sieves (often loosely termed microporous materials) containing an actinide in combination with atoms selected from the group consisting of oxygen, fluorine, phosphorus, transition metals and mixtures thereof. The molecular sieve material may contain a template species, which suitably comprises an organic template molecule and/or a cationic metal species; it may also contain water. Additionally, it may contain a dopant, usually in a minor amount; suitable dopants include transition metals to modify the catalytic properties of the materials. Preferred molecular sieves of the invention comprise layered structures in which layers containing actinide in combination with atoms selected from the group consisting of oxygen, fluorine, phosphorous, transition metals and mixtures thereof have organic templates and/or cationic metal species located between them. In one class of materials, the layers contain an oxoanion (preferably a phosphate, notably orthophosphate, or a transition metal oxoanion); in this class, the actinide may usually be represented as an oxo ion, especially an oxocation. In another class of materials, the layers contain actinide and fluorine.

The invention includes materials with the empirical formula:

(X)_{g} (M)ₕ (A)ᵢ(F)ⱼ nH₂O. mT

wherein:
X is AnO₂, AnO₂F₂ or AnF₄ in which An is an actinide metal;
A is an oxoanion or a mixture of oxoanions;
F is fluorine;
T is an organic template or cationic metal species;
M is one or more non-actinide metals;
g, h, i, j, n and m are the mole fractions of X, M, A, F, H₂O and T, respectively, and balance the charge of the material to neutral, and:
   g is from 1 to 10
   h is from 0 to 10
   i is from 0 to 20, the i:g ratio usually being from 0 to 3 (e.g. 0, 1, 2 or 3), but i is normally not 0 unless j is greater than 0
   j is from 0 to 20, the j:g ratio usually not exceeding 5 and j often being 0 when i is greater than 0
   n is 0 or more, e.g. from 0 to 20, the n:g ratio often being from 0 to 3 (e.g. 0, 1, 2 or 3)
   m is 0 or more, e.g. 0 to 10, for example 0, 2 or 3, the m:g ratio usually being from 0 to 2 (e.g. 1:3, 1:2, 3:5 or 3:2) and h and m normally not both being O [(h + m):g = at least 1:3 in most cases].

Symbol An preferably stands for U. A is most commonly a phosphorus oxoanion or mixed phosphorus oxoanions, for example it may be orthophosphate, PO₃F²⁻ or an organophosphonate (e.g. an RPO₃²⁻ moiety in which R is an organic group, especially methyl or other alkyl, including for example linear, branched and cyclic alkyl structures).

In one class of the materials of the above empirical formula, X is AnO₂, A is a phosphorus oxoanion and preferably orthophosphate, and j is O; most preferably a portion of the oxoanions are protonated. Especially preferred are layered materials in which the layers are of the formula:

[(AnO₂)_{g} (HPO₄)_{g-p} (PO₄)ₚ]^{p-},

in which An is a hexavalent metal, especially U(VI), and preferably in which g is 2 and p is 1 or g is 3 and p is 1.

In a second class of these materials, X is AnF₄ and preferably UF₄, i is O and j is at least 2 and more preferably is 2. Especially preferred are layered materials in which the layers are of the formula An₂F₁₀, in which An is a tetravalent metal, especially U(IV).

In a third class of these materials, X is AnO₂ and preferably UO₂²⁺, A is a phosphorus oxoanion and preferably orthophosphate, j is O and M is a monovalent metal ion, especially Ag⁺.

Another class of these materials has U as An and phosphorus oxoanions as A. Preferred materials of this class have a P:U ratio of from 0.1:1 to 10:1 and a mixed phosphorus oxide in which the P:O ratio is 2:5. In preferred embodiments these are crystalline materials with a lamellar (layered) structure. Materials with interplanar spaces of greater than 30 Å have been prepared.

The materials may be in substantially pure form (e.g. greater than 95% pure).

The molecular sieves of the invention are useful in ion exchange, catalysis and absorption.

### BRIEF DESCRIPTION OF THE DRAWINGS

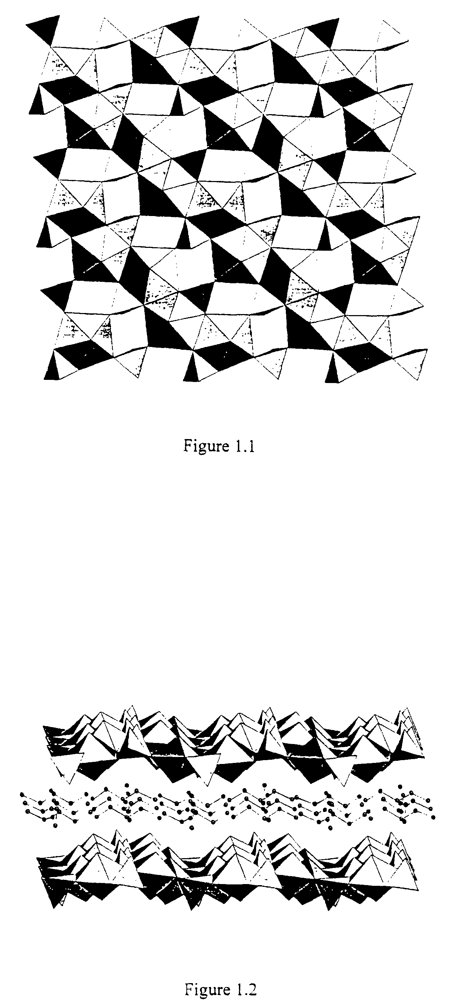

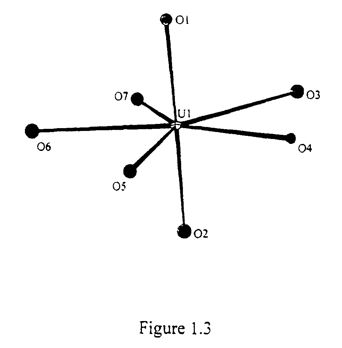

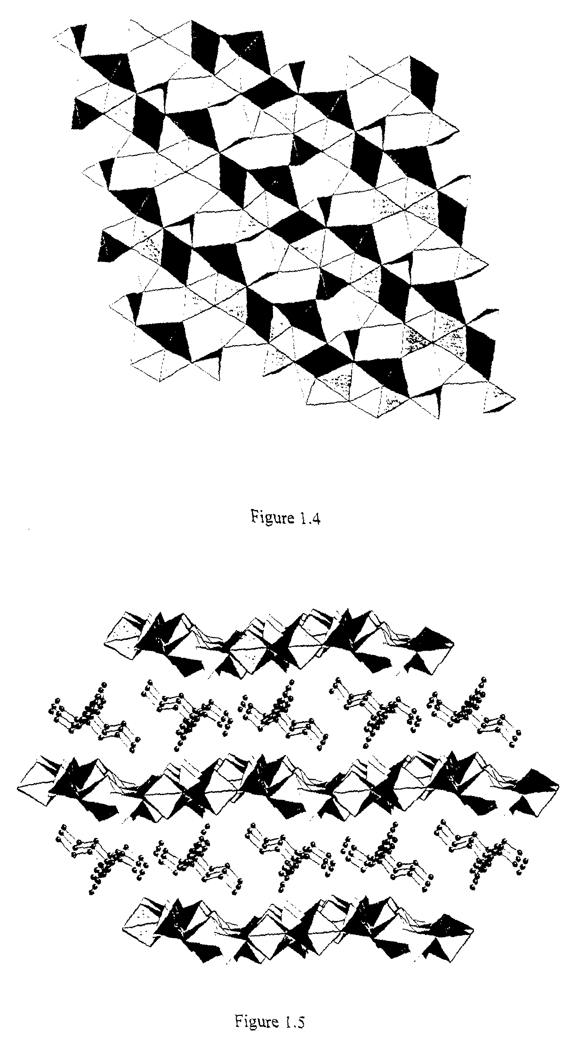

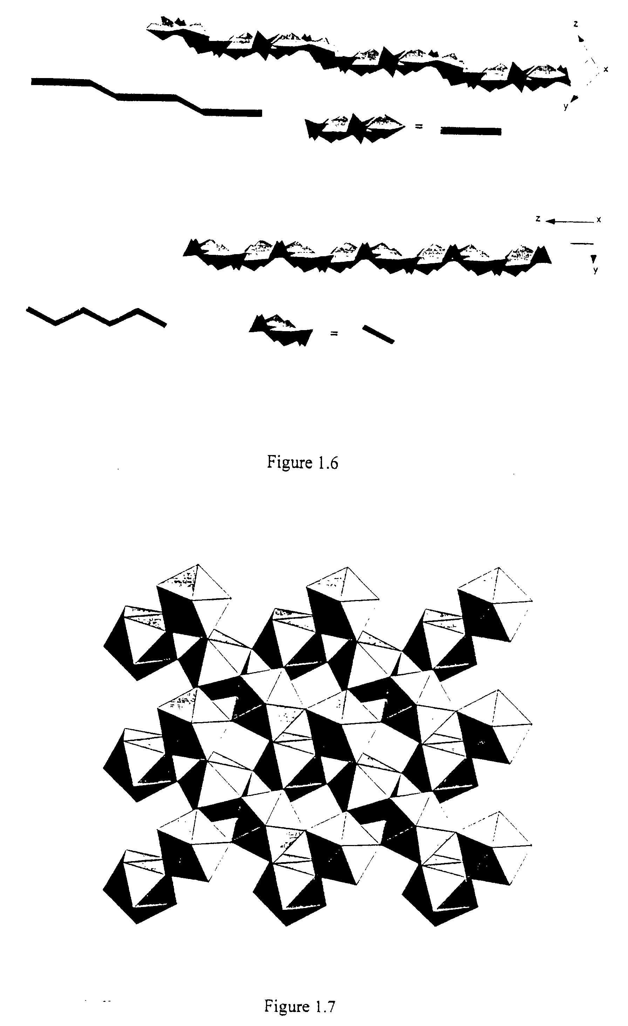

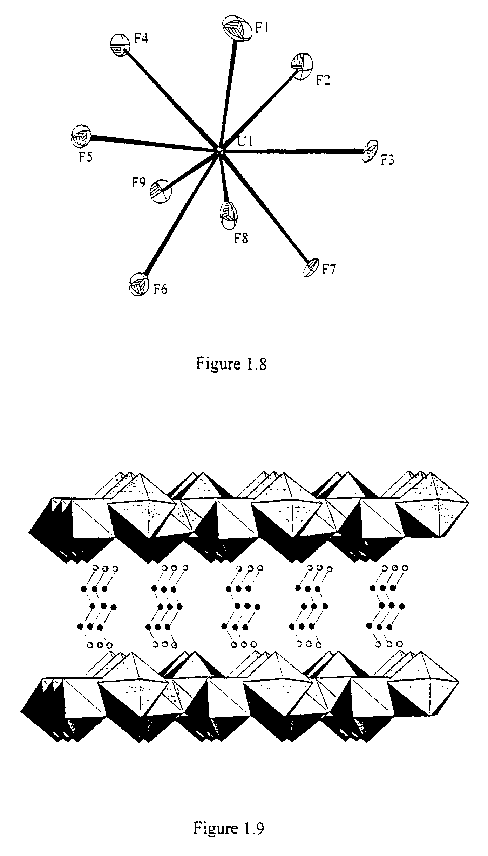

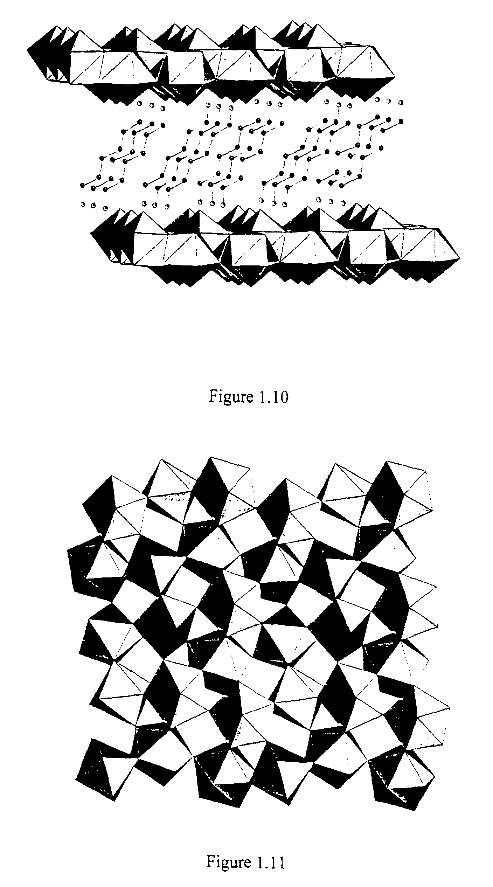

Figure 1.1 A view of the structure of (HN(CH₂CH₃)₃)(UO₂)₂(PO₄)(HPO₄) looking along the [010] direction showing the uranium phosphate layers formed by chains of edge sharing [UO₇] pentagonal bipyramids bridged by tetrahedral phosphate groups.

Figure 1.2 A view of the structure of (HN(CH₂CH₃)₃)(UO₂)₂(PO₄)(HPO₄) looking approximately along the [100] direction showing the uranium phosphate layers and the HN(CH₂CH₃)³⁺ cations lying between them.

Figure 1.3 Diagram of the local coordination of the uranium atoms in (HN(CH₂CH₃)₃)(UO₂)₂(PO₄)(HPO₄) showing the two short axial uranyl bonds and the five longer equatorial bonds.

Figure 1.4 A view of the structure of (N(CH₂CH₂CH₃)₄)(UO₂)₃(PO₄)(HPO₄)₂ looking along the [O1-1] direction showing the similarity of the layer structure to that seen in (HN(CH₂CH₃)₃)(UO₂)₂(PO₄)(HPO₄).

Figure 1.5 A view of the structure of (N(CH₂CH₂CH₃)₄)(UO₂)₃(PO₄)(HPO₄)₂ looking along the [100] direction showing the uranium phosphate layers and the (N(CH₂CH₂CH₃)⁴⁺ cations lying between them.

Figure 1.6 Schematic representation of the differences in the structure of the [(UO₂)ₙ(PO₄)(HPO₄)ₙ₋₁]- layers in 1 and 2. In 1 (lower section of diagram) chains of phosphate tetrahedra running along the [100] direction point either all up or all down leading to a approximately sinusoidal corrugation of the layers. However, in 2 (upper section) the presence of chains in which the tetrahedra point up and down leads to the formation of relatively flat sections within the layers.

Figure 1.7 A view of the structure of a single uranium fluoride layer of (H₃N(CH₂)₃NH₃)U₂F₁₀.2H₂O viewed perpendicular to the layer (along the [100] directions) showing how the layer is constructed from corner sharing [UF₉] tri-capped trigonal prisms. (H₃N(CH₂)₄NH₃)U₂F₁₀.3H₂O and (H₃N(CH₂)NH₃)U₂F₁₀.2H₂O contain essentially identical layers.

Figure 1.8 Diagram showing the local coordination around each uranium atom in the compounds (H₃N(CH₂)₃NH₃)U₂F₁₀.2H₂O, (H₃N(CH₂)₄NH₃)U₂F₁₀.3H₂O, and (H₃N(CH₂)₆NH₃)U₂F₁₀.2H₂O

Figure 1.9 The structure of (H₃N(CH₂)₃NH₃)U₂F₁₀.2H₂O viewed along the [010] direction showing the location of the organic template between the uranium fluoride layers. The (H₃N(CH₂)₃NH₃)²⁺ lies on an inversion centre and the end carbon is disordered around this position. For clarity this disorder is not represented in this figure and only one orientation of the template is shown.

Figure 1.10 The structure of (H₃N(CH₂)₆NH₃)U₂F₁₀.2H₂O viewed along the [010] direction showing the location of the organic template between the uranium fluoride layers.

Figure 1.11 The structure of (HN(CH₂CH₂NH₃)₃)U₅F₂₄ viewed along the [10-1] direction showing a single [U₅F₂₄]ₙ⁴ⁿ⁻ layer.

### DESCRIPTION OF THE PREFERRED EMBODIMENTS

The invention provides a molecular sieve material containing an actinide, especially uranium, in combination with oxygen, fluorine, phosphorus and/or transition metals. As will be apparent from the following detailed description, the invention includes in particular molecular sieve materials in which the framework consists essentially of an actinide in combination with one of the aforegoing species (and therefore essentially free of silicon, for example) but optionally doped with a dopant.

The molecular sieve materials of the invention usually contain a template species (occupying pores or gaps) or water, or both. The template species may be an organic template molecule or a cationic metal species.

Various preferred genera of materials may be stated, as set forth below. Of course, the invention is not limited to these genera and it will be apparent to the skilled person that features referred to in relation to one genus are applicable to other products of the invention, except to the extent that mutually exclusive features are involved.

### Genus 1

A first genus of the materials which may be defined contain actinide atoms together with phosphorus atoms or atoms of a first or second row transition metal.

The preferred actinide is uranium.

Examples of first or second row transition metals whose atoms may form part of the molecular sieve are chromium, vanadium, molybdenum and rhodium.

Preferably the molecular sieve includes atoms of phosphorus and it is preferred that the ratio of phosphorus to uranium atoms in the molecular sieve is in the range 0.1 to 10.

The molecular sieve may be made by any suitable method, for example by a method which comprises reacting together an actinide-containing reactant and a reactant containing phosphorus atoms or atoms of a first or second row transition metal, the reaction being conducted in the presence of a structure directing and/or pH modifying material referred to as a template.

Preferably the template is an organic compound. It is normally present in the reaction mixture in an amount up to 50% by weight, preferably from 2% to 20% by weight. Preferred templates are primary, secondary or tertiary amines, alcohols and crown ethers. As mentioned above, the molecular sieves are useful as catalysts, for instance, oxidation, epoxidation or hydroxylation catalysts. For example, a molecular sieve of the present invention is of use as a catalyst in the oxidation of toluene to the corresponding carboxylic acid.

In the case of the preparation of a molecular sieve which includes both uranium atoms and phosphorus atoms, the reactant may be any suitable uranium-containing material and any suitable phosphorus-containing material. The following table gives examples of reactants and the "normal" products of their reaction. However, it should be appreciated that, in the presence of the template molecules, molecular sieve materials are formed which may be related to the normal reaction products but are likely to include groups provided by the template molecules.

| **Preparation of Uranium - Phosphate Compounds** | |
|---|---|
| "Normal" product | Method of Preparation |
| *Hydrophosphites* U(H₂PO₂)₄ | Precipitation of U(SO₄)₂ solution with H₃PO₂ |
| UO₂(H₂PO₂)₂ | Precipitation of UO₂²⁺ solution with NaH₂PO₂ |
| | |
| *Phosphites* | |
| | |
| U(HPO₃)₂ | Precipitation of U(SO₄)₂ solution with Na₂HPO₃ |
| UO₂HPO₃ | Precipitation of UO₂²⁺ solution with Na₂HPO₃ |
| | |
| *Metaphosphates* U(PO₃)₄ | HPO₃ (in CO₂ stream) passed over UO₂ at red heat |
| UO₂(PO₃)₂ | Evaporate HNO₃ solution of UO₂(H₂PO₂)₂ and ignite |
| | |
| *Orthophosphates* U₃(PO₄)₄ | Precipitation of UCl₄ solution with Na₃PO₄ |
| U(HPO₄)₂ | Precipitation of UCl₄ solution with Na₂HPO₄ |
| (UO₂)₃(PO₄)₂ | Addition of uranyl nitrate to phosphoric acid |
| UO₂HPO₄ | Dilution of crystals formed from the above mixture |
| | |
| *Pyrophosphates* UP₂O₇ | Ignition of U(HPO₄)₂ |
| (UO₂)₂P₂O₇ | Addition of Na₄P₂O₇ solution to UO₂²⁺ solution |

In addition to the reactants mentioned in the above table, other uranium starting materials may be used. Examples are uranium fluorides such as UF₄. The use of fluoride-containing starting materials in conjunction with mineralising agents such as HF and NH₄F can yield Genus 1 molecular sieves.

When the reactants are mixed together, they typically form a gel which may be aged, preferably for a period up to three hours. The resulting gel may then be subjected to reaction in a sealed container at a temperature which is preferably between 100 and 200°C.

The reaction mixture includes water and the amount of water present will affect the structure of the molecular sieve which is formed.

### Genus 2

The second genus of materials into which the products of the invention may be categorised are microporous actinide compounds (for example layered structures in which the interlayer spacing is typically from 5 to 20 Å but may be greater or smaller than this) having the empirical formula

(X)_{X} (M)_{Y} (A)_{Z} (F)_{W}• nH₂O mT

wherein:
X represents AnO₂, AnO₂F₂ or AnF₄ in which An is an actinide metal
A represents an oxoanion or a mixture of oxanions
F is fluorine
T represents an organic templating agent
M represents one or more non-actinide metals
x, z, m, w and y are the mole fractions of X, A, T, F and M, respectively, and balance the charge of the compound to neutral, and:
x is an integer from 1 to 10
y is from 0 to 10
z is from 0 to 20
w is from 0 to 20
n is from 0 to 20
m is from 0 to 10,
the organic templating agent, when present, being present in the micropores in the compounds. Preferably, x is 10, y, z, w, m and n have values falling within the ranges given above. More preferably, z is from 1 to 20.

The compounds have structures which are two or three dimensional frameworks made up of material of formula (X)_{X} (M)_{Y} (A)_{Z} (F)_{W}. It is difficult to pinpoint the exact position of the hydrogen atoms within the compounds using known structure determination techniques. However, they may be associated with one or more of the anions A, with one of the other groups in the framework, with the organic templating agent, if present, or otherwise present in the micropores in the structure. A number of compounds have layered structures comprising layers of formula (X)_{X} (M)_{Y} (A)_{Z} (F)_{W} and, when present, organic templating agent between the layers. The spacing between the layers is typically from 5 to 20 Å but may be greater or smaller than this.

The actinide metal in the compounds is preferably uranium. However, other actinide metals such as thorium may be used. The metal is present in the compounds in the An^{VI} oxidation state and may be regarded as being in a form containing the AnO₂²⁺, AnO₂F₂ or AnF₄²⁺ species complexed with one or more of the oxygen atoms of the oxoanion A.

The oxoanion A may be the oxoanion of an element of Group VB of the periodic table and may be fluorinated. Suitable oxoanions include HPO₄²⁻, PO₄³⁻, HPO₃F⁻, PO₃F²⁻, HAsO₄²⁻, AsO₄³⁻, HAsO₃F⁻, AsO₃F²⁻ and RPO₃²⁻ in which R is an organic group, especially aryl or alkyl, including for example linear, branched and cyclic alkyl structures; preferred R groups include methyl and ethyl. The compounds may contain a single oxoanion species, a mixture of different oxoanions or a mixture of protonated and unprotonated forms of the same anion. As mentioned above, it is difficult to locate the exact position of hydrogen atoms in the structure of the compounds and this is therefore uncertain. However, the compounds may contain hydrogen atoms bound to an oxoanion or shared between the same or different oxoanions.

It has been found that the actinide compounds can be produced without the need for an organic templating agent to create the pores. Some of the compounds have structures which are inherently microporous and this is why an organic templating agent is not always necessary. Examples of compounds of this type are a number of the compounds containing a metal M, such as the compounds in which M is silver; the metal can presumably act in the same general manner as a templating agent in being responsible for the formation of micropores in the structure.

Compounds which are formed without an organic templating agent typically have honeycomb-type framework structures rather than layered structures.

It will therefore be appreciated that the organic templating agent is not an essential component of either the compounds or the processes for their production.

Of course, an organic templating agent can be used to form the compounds of the invention in the same manner as in the prior art processes disclosed in EP-A-0132708 and EPA-0158977, for example. The organic templating agent T is preferably of the formula R¹ R² R³ R⁴ N⁺ or a quaternary ion formed by the N-alkylation of a heterocyclic ring, as described in more detail below under the heading "Template Species". In relation to Genus 2 compounds, the term "aryl" used in reference to the template in particular covers phenyl and naphthyl, suitable organic templating agents including tetrapropylammonium and triethylammonium ions.

The organic templating agent is preferably removable from the structure of the compound such that the micropores which the organic templating agent molecules or ions occupy may become vacant and available for substrates in catalysis, absorption, or ion exchange. Therefore, the presence of the organic templating agent in the compounds is optional. The organic templating agent can be removed from the compound by a number of methods including, for example, ion exchange or heating the compound to volatilise and/or decompose the organic templating agent.

Non-actinide metals M may optionally be included in the compounds of the invention in order to provide a metal centre whose properties may be of importance when the compounds are used for catalysis, absorption or ion exchange. Metals M are non-actinide metals (such as, for example, zinc, cadmium, antimony or silver) and may be, but are not exclusively, transition metals (Groups IV A through II B). The type and amount of metal M present in the compound can dictate the physical and/or chemical properties of the compound. Suitable transition metals for M include, but are not limited to, those from the first row of the periodic table such as copper, for example. The non-actinide metal M may be present as one metal or a mixture of two or more metals and will generally be in the M^{I} to M^{VII} oxidation state. The metal atoms are co-ordinated to oxygen atoms in the compounds.

The compounds are optionally hydrated with stoichiometric or non-stoichiometric amounts of water, typically from 0 to 20 mole equivalents based on the amount of actinide metal present. Water may be removed from the compounds by heating at an elevated temperature.

As mentioned above, the presence of organic templating agents and metals in the compounds is optional. Therefore, y and m may both be zero.

Compounds which have layered structures are, for example, (UO₂)ₓ(PO₄)₂(HPO₄)₂,(T)ₘ where x, z, z' and m are 2, 1, 1, 1 and 3, 1, 2, 1 respectively, or the corresponding compounds in which m=0

A process for producing the compounds by a hydrothermal technique comprises heating a mixture comprising an actinide oxide, halide or oxohalide, optionally an organic templating agent or a precursor therefor, one or more species capable of forming oxoanion A, optionally a source of non-actinide metal M and water or an aqueous solvent. The reaction is carried out at an elevated temperature above 50 °C, preferably above 100 °C, and at a pressure above atmospheric pressure for a time sufficient to form crystals of the compound. The hydrothermal technique resembles the conventional process described in, for example, EP-A-0132708.

The process may involve the formation of a gel from the reactants prior to heating. Preferably, however, for the compounds of this Genus, the mixture is heated without an intermediate step of gel formation.

The process may involve heating in a sealed pressure vessel, such as an autoclave, preferably lined with an inert plastics material such as polytetrafluoroethylene. Preferably, the reaction is carried out under autogenous pressure. Suitable reaction temperatures are from 100 °C to 250 °C (e.g. 150 °C to 250 °C) although the actual temperature required to produce a given compound will fall within a far narrower range which is specific for that compound but can be readily determined. Suitable reaction times can vary from a few hours to a few weeks, such as for example from about 1 hour to about 48 hours, and will again vary with the particular compound which is being produced. The reaction is carried out until crystals of the compound are obtained. The cooling rate for obtaining the crystals is important and typical crystallisation times are from about 2 hours to about 2 days with cooling rates varying from about 1 °C per second to about 1 °C per hour. The crystals of the product are suitably separated from the reaction mixture in conventional ways such as by centrifugation or filtration.

The actinide oxide, halide or oxohalide used in the process can be a single compound or a mixture of compounds. Preferred compounds are the oxides, fluorides and oxofluorides. The metal may be present in the oxide, halide or oxohalide in any of its common oxidation states, e.g. M^{IV} or M^{VI}, since the reaction conditions are generally sufficiently oxidising to ensure that the metal is converted to the M^{VI} form for the compound of the invention. Suitable actinide compounds for use in the process include UO₃, U₃O₈, UO₂, UF₆, UO₂F₂, UOF₄, and UF₄, of which U₃O₈, UF₄ and UF₆ are particularly preferred. The oxides may be used as hydrated oxides.

The organic templating agent may be included in the reaction mixture as a salt, or a precursor of the organic templating agent may be used. For example, when the process is carried out in acidic media, for example when hydrofluoric acid is used as the solvent, a free amine may be added to the reaction mixture since it will become protonated to form the organic templating agent under these acidic conditions. Preferably, the organic templating agent is provided as the hydroxide salt R¹R²R³R⁴N⁺ OH⁻.

Oxoanion A may be provided by an acid which is a protonated form of the oxoanion or by a salt containing the oxoanion. For example, when the compound of the invention contains phosphate (PO₄³⁻) as the oxoanion, phosphoric acid (H₃PO₄) or one of its salts such as with an alkali metal (e.g. NaH₂PO₄, Na₂HPO₄, Na₃PO₄) may be used.

When the compound contains a non-actinide metal M, a source of metal M (preferably as a metal oxide) is included in the reaction mixture.

### Genus 3

The invention may further be said to provide crystalline molecular sieve materials having an actinide/heteroatom framework in which the heteroatom is oxygen or fluorine, or both. The actinide/heteroatom framework may additionally contain one or more oxoanions. This framework defines cages or pores or interlayer gaps; the cages, pores or interlayer gaps may - and usually do - contain organic templates or inorganic species which in practice are cationic metal species and which may be viewed as inorganic templates. The materials normally fall within the empirical formula stated above. If desired the materials may be doped, e.g. with a transition metal for catalytic purposes.

Uranium is a preferred actinide but other actinides may be used, or actinide mixtures preferably containing uranium.

### Frameworks containing oxoanions

In some of the materials the actinide/heteroatom framework contains one or more oxoanions. These are preferably one or more of the phosphorus anions referred to previously, which anions may be partially protonated. The materials are not restricted to phosphorus anions and, in principle, any oxoanion may be used, for example HAsO₄²⁻, AsO₄³⁻, HAsO₃F⁻ or AsO₃F²⁻. It is difficult to locate the exact position of the hydrogen atoms in the structure of the materials: they may contain hydrogen atoms bound to an oxoanion or shared between the same or different anions.

Preferred frameworks are U/P/O frameworks (or analogues in which U is at least partially replaced by another actinide), especially those in which P is a mixed oxide of empirical formula P₂O₅ or is as one or both of PO₄³⁻ and HPO₄²⁻, the PO₄³⁻: HPO₄²⁻ ratio suitably being 1:1 or 1:2. The U is suitably U(VI) and more particularly UO₂²⁺; alternatively another actinide oxoion may be used, especially one containing a hexavalent actinide.

The material is synthesised using an organic template or an inorganic template (i.e. a cationic metal species, for example Ag⁺ or another transition metal ion), the template in the product being located in a space defined by the oxoanion-containing framework. The products are normally layered structures in which the template moieties are located between the layers. The template atoms/molecules may be exchanged for other ions making the products useful as ion exchange purposes. If desired a mixture of template moieties (non-framework moieties) may be used.

The products containing inorganic templates (or, alternatively stated, having inorganic non-framework moieties) are stable at relatively high temperatures and are useful for catalysis at elevated temperatures.

### Frameworks containing F

In certain of the materials the actinide/heteroatom framework contains fluorine. Preferred frameworks are actinide/F frameworks, for example U/F frameworks which are substantially free of oxygen. The actinide is suitably tetravalent, e.g.U(IV). In some materials, the U:F ratio is 1:5 and in some others it is 5:24.

As with the oxoanion frameworks, the fluorine framework materials contain an organic or inorganic template, or one or more alternative ions for which the template moieties have been exchanged. The materials are useful in ion-exchange and catalysis.

### Synthesis

A suitable strategy, especially for making the phosphorus-containing materials, is to adapt the techniques used previously to synthesise microporous metal phosphates, and make use of the same types of templating agents that have proved so successful in the synthesis of zeolites and other types of molecular sieve materials. In preferred embodiments, the synthesis mixture consists of four components: an actinide source, a phosphorus source, water and an organic template. The concept of a template as a species which acts as a structure directing agent during the crystallisation of molecular sieves is not completely understood, but their use is very familiar in the synthesis of open framework materials. Generally, the actinide source, phosphorus source and water are mixed, the templating reagent added and then the resulting mixture is heated under autogenous hydrothermal conditions at temperatures of at least 100°C (and often of > 150°C) to 175°C or sometimes more, for a prolonged duration typically of less than 24 hours to several days.

The synthetic technique may use fluoride as a mineralising agent. The use of fluoride as a mineralising agent in hydrothermal syntheses was originally pioneered by Flanigen and Patton as a new method of synthesising zeolites (E.M. Flanigen, R.L. Patton U.S., 1978). The technique was then further developed by Guth and Kessler (J.L. Guth, H. Kessler, R. Wey; *Stud. Surf. Sci. Catal.* 1986, **28,** 121; J.L. Guth, H. Kessler, J.M. Higel, J.M. Lamblin, J. Patarin, A. Sieve, J.M. Chezcau, R. Wey; *ACS Symp*. *Ser.* 1989, **398,** 17). Replacement of OH⁻ ions by F⁻ ions allows the crystallisation of zeolites to be performed in neutral or acidic conditions which, in turn, allows the synthesis of heteroatom (e.g. B, Al, Fe, Ga, Ti) substituted high silica zeolites. These cannot be synthesised under high pH conditions because many transition metal ions are not stable under such conditions. Of importance to the present invention, however, is the application of the fluorine method to the synthesis of microporous metal phosphates (the use of fluorine appears to aid the crystallisation of metal phosphates).

Hydrothermal synthesis using fluorine and phosphate may also be used to synthesise the actinide/fluorine frameworks. Such procedures suitably use U₃O₈, H₃PO₄, HF and a template as the starting materials.

### Genus 4

The invention includes molecular sieves containing an actinide in combination with oxygen and/or fluorine, and at least one transition metal oxo species. The molecular sieve material may contain organic template molecules and/or cationic metal species (which may be said to be an inorganic template); it may also contain water. Additionally, it may contain a dopant, usually in a minor amount; suitable dopants include transition metals to modify the catalytic properties of the materials. Some preferred molecular sieves comprise layered structures in which layers containing actinide and transition metal in combination with oxygen and/or fluorine have organic templates and/or cationic metal species located between them.

The transition metal oxo species typically comprises a transition metal of the second or third transition series, most notably molybdenum or tungsten. The oxo species are suitably derived by hydrothermal synthesis from an oxide or oxo anion of the transition metal and are considered to be oxo anions, for example molybdate or tungstate derived respectively from, for example Mo₂O₇²⁻ and WO₄²⁻.

The actinide is preferably uranium but other actinide metals, for example thorium may be used.

### Synthesis

The invention includes products made by the hydrothermal synthesis of a mixture comprising an actinide source, a transition metal oxo species source, water and an organic template. Generally, the actinide source, transition metal oxo species source and water are mixed, the templating agent added and then the resulting mixture is heated under autogenous thermal conditions as described above in relation to Genus 3 materials. In particular, the mixture is often heated at temperatures of greater than 150°C for a prolonged duration typically of several days. The actinide source is suitably an actinide oxide or oxoanion, for example U₃O₈ or uranyl nitrite in the case of uranium. The transition metal oxo species source is suitably a transition metal oxide or oxoanion. The template may be, for example, any known templating agent.

### TEMPLATE SPECIES

The identity of the template species is not critical to the invention. To the contrary, a wide range of species may be used. However, the organic template is preferably of the formula R¹R²R³R⁴N⁺ wherein R¹, R², R³ and R⁴ are independently selected from hydrogen, C₁ to C₁₈ alkyl, C₁ to C₁₈ alkylenyl, C₆ to C₁₀ aryl and alkaryl, optionally substituted with one or more C₁ to C₁₈ alkyl groups, or the template is for example a quaternary ion formed preferably by the N-alkylation with a C₁ to C₁₈ alkyl group of a saturated or unsaturated, aromatic or non-aromatic, monocyclic or polycyclic, bridged or unbridged, nitrogen-containing heterocyclic ring. The term "alkyl", as used here, covers branched and unbranched, linear and cyclic C₁ to C₁₈ groups. The term "alkylenyl" is defined similarly. The term "aryl" refers in particular to an aromatic structure, whether monocyclic or polycyclic and includes phenyl and naphthyl, and the term "alkaryl" refers to aryl groups bound to the nitrogen atom in the formula R¹R²R³R⁴N⁺ via a linking (CH₂)ₙ group wherein n is an integer from 1 to 3, optionally substituted on the (CH₂)ₙ group with a C₁ to C₆ alkyl or alkylene group.

Preferred values for R¹, R², R³, R⁴, are hydrogen, C₁ to C₆ alkyl (such as methyl, ethyl, propyl or butyl), phenyl optionally substituted with from 1 to 3 alkyl groups and benzyl.

Suitable organic templating agents include tetrapropylammonium and triethylammonium ions, ethylene diamine, 1,3 diaminopropane, 1,4 diaminobutane and 1,6 diaminohexane. The shape and size of the templating agent dictates the type of the structure (i.e. whether it is two or three dimensional) and the size of the micropores (in the broad sense, including pore sizes of greater than 50 Å) which are formed in the compound. Hence, the compound can be tailored to have a given type and size of micropore for different applications by selecting the organic templating agent accordingly.

The products may be made using an inorganic templating agent, for example Ag⁺ or another transition metal ion (which is suitably used as the oxide in the synthesis of the product). Inorganic templating agents, for example silver or copper ions, are useful for making materials stable at high temperatures.

### USE

The materials of the invention may be used as catalysts, sorbents, ion-exchange reagents or as host materials for inclusion complexes. For example, they may be used in a method of oxidising an organic compound, comprising contacting the compound with a material of the invention and an oxidant for a time and at a temperature sufficient for the oxidation to occur. Suitably the oxidant is hydrogen peroxide or another peroxide. Alternatively it may be ozone.

Product of the invention has been found useful for oxidising alcoholic hydroxy groups to a ketone or aldehyde, which in turn is optionally further oxidised to a carboxyl group. Thus, the invention includes the oxidation of, in particular, ketonic carbonyl groups to carboxy groups.

The products of the invention are useful also for oxidising C=C double bonds, for example to an epoxide which may be ring-opened, for example by hydrolysis to form a diol. Alternatively, C = C double bonds may be oxidised to a carbonyl group.

Alkyl groups substituted onto an aryl group (e.g. phenyl) may be oxidised to -OH, -CHO, -CH₂OH or -COOH. The alkyl groups may be substituted, as may the aryl groups. The nature of the substituents is not critical but halogen and alkoxy may be mentioned as examples.

### EXAMPLES

One of the problems encountered in exploratory hydrothermal syntheses is the very large number of possible reaction variables, e.g. the relative concentration of each component, pH, temperature, time of reaction, autoclave filling volume, cooling rate, and so on. In order to cut to cut down the number of possible variables to a manageable number, a synthetic strategy was adopted by the inventors in relation to Examples 6 to 13 in which all reactions were carried out at 180°C.

In the following Examples 1 to 4 phosphoric acid was used as the source of phosphorus and uranyl nitrate was used as the uranium source. For each template used, the method of preparation involved mixing solutions with varying P/U ratios with the templates and allowing them the crystallise at 100-150°C.

### Example 1

Using dodecylamine, molecular sieves having the following compositions were obtained:
Molecular Formula
1.0 P₂O₅ : U₂O₄ : C₁₂H₂₄NH₂ : 80H₂O
0.8 P₂O₅ : U₂O₄ : C₁₂H₂₄NH₂ : 80H₂O
0.6 P₂O₅ : U₂O₄ : C₁₂H₂₄NH₂ : 80H₂O
P₂O₅: 0.8 U₂O₄ : C₁₂H₂₄NH₂ : 80H₂O
P₂O₅: 0.6 U₂O₄ : C₁₂H₂₄NH₂ : 80H₂O

Uranyl nitrate was prepared by dissolving uranium dioxide in the minimum amount of nitric acid and 10g of distilled water. The remaining water (according to the above compositions) was added to the orthophosphoric acid (85% wt.). The two solutions were then mixed together thoroughly and added to dodecylamine. The resultant mixture was aged for approximately one hour. The pH of the gel was found to be about 1 at this point.

The resulting gel was then placed in a teflon lined Parr acid digestion bomb (Model 4744). The bomb had a total capacity of 45ml and was 2/3 full. The bomb was placed in a Gallenkamp® oven at 100°C for 24 hours. It was then removed from the oven, quenched in cold water and left to cool. Once cooled the resulting solid was filtered from the mother liquor using a Buchner flask and funnel with a Whatman® filter paper number 542. It was then dried in the oven at 80°C for 4 hours. The resultant solid was analysed on a Philips® X'Pert X-ray powder defraction (XRPD) machine and also using an Electroscan environmental scanning electron microscope (ESE).

### Example 2

Tripropylamine was used as the template and molecular sieves having the following compositions were prepared:
Molecular formula
1.0 P₂O₅ : U₂O₄: C₉H₂₁N: 240 H₂O
0.8 P₂O₅ : U₂O₄ : C₉H₂₁N : 240 H₂O
0.6 P₂O₅ : U₂O₄ : C₉H₂₁N : 240 H₂O
P₂O₅ : 0.8 U₂O₄ : C₉H₂₁N : 240 H₂O
P₂O₅ : 0.6 U₂O₄ : C₉H₂₁N : 240 H₂O

### Example 3

1,8-diaminooctane was used as the template and molecular sieves having the following compositions were prepared:
1.0 P₂O₅ : U₂O₄ : C₈H₂₀N₂ : 240 H₂O
0.8 P₂O₅ : U₂O₄ : C₈H₂₀N₂: 240 H₂O
0.6 P₂O₅ : U₂O₄ : C₈H₂₀N₂ : 240 H₂O
P₂O₅ : 0.8 U₂O₄ : C₈H₂₀N₂ : 240 H₂O
P₂O₅ : 0.6 U₂O₄ : C₈H₂₀N₂ : 240 H₂O

### Example 4

Tetrapropylammonium hydroxide was used as the template and the following molecular sieve compositions were prepared:
1.0 P₂O₅ : U₂O₄ : C₁₂H₂₉NO : 240 H₂O
0.8 P₂O₅ : U₂O₄ : C₁₂H₂₉NO : 240 H₂O
0.6 P₂O₅ : U₂O₄ : C₁₂H₂₉NO : 240 H₂O
P₂O₅ : 0.8 U₂O₄ : C₁₂H₂₉NO : 240 H₂O
P₂O₅ : 0.6 U₂O₄ : C₁₂H₂₉NO : 240 H₂O

In Examples 2 to 4 a stock solution of uranyl nitrate liquor containing 10gU/100ml and 0.25g free acid/100ml was made. This solution was added to orthophosphoric acid (85% wt.) and the templates were immediately added. The resultant mixture was left to age for 1 hour. The pH of the gel was taken in all cases and found to be 1. The mixture was placed in a Parr acid digestion bomb, in these cases the bomb being only 1/3 full. The bomb was placed in a Gallenkamp® oven at 100°C and left for 24 hours. It was then quenched in cold water and left to cool. The mixture was filtered using a Buchner flask and funnel with a Whatman® filter paper number 542. The solid was left to dry in the oven at 80°C for 4 hours. The solid was then analysed using a Philips® X'Pert XRPD and an electroscan ESEM.

The materials produced in Examples 1 to 4 are crystalline and XRPD has indicated a highly ordered lamellar phase with interplanar spaces of greater than 30Å. Scanning electron microscopy (SEM) indicates some of the materials to be of a single phase. In some cases the materials resemble large rods of approximately 200*µ*m in length and 5*µ*m in diameter; other materials resemble large 200*µ*m square plates with a morphology similar to that of a flaky pastry.

### Example 5

### Synthesis of Ag(UO₂) (PO₃F) F.H₂O

Single crystals of Ag(UO₂) (PO₃F) F.H₂O were grown by heating mixtures of composition U₃O₈: 12 H₃PO₄: 12 HF: 1.5 Ag₂O: 240 H₂O at 150 °C for 1 day and cooling to room temperature over 1 day. Crystals formed as large green 'cubes' together with a small amount of powder impurity.

### Example 6

### Synthesis and Structure of (HN(CH₂CH₃)₃)(UO₂)₂(PO₄)(HPO₄)

Single crystals of (HN(CH₂CH₃)₃)(UO₂)₂(PO₄)(HPO₄) were grown by heating mixtures of composition U₃O₈:9H₃PO₄:3N(CH₂CH₃)₃:24OH₂0 under autogenous hydrothermal conditions in PTFE-lined autoclaves at 180°C for 3 days. The crystals formed as flat plates together with a small amount of microcrystalline impurity of undetermined composition. A range of initial reaction stoichiometries were studied and each resulted in the formation of the same phase, but the above ratios were found to be optimal for the synthesis of large quantities of crystals. The crystals could be easily separated by sieving.

Specifically, the synthesis was as follows: A mixture of U₃O₈, H₃PO₄ NEt₃, and H₂O in molar ratio 1:9:3:240 was placed in a 23 ml capacity Teflon-lined autoclave to a volume fill of about 40% and heated to 180°C at autogenous pressure for 3 days. After cooling to room temperature at a rate of 4°C/hr, light green plates of product and a small amount of powder impurity were filtered, washed with water, and allowed to dry in air. The crystals could be easily separated by. sieving. IR (Nujol mull, υ/cm⁻¹):2750w (br), 1623m (br), 1096s, 1062s, 1030s, 959s, 919s, 850m, 800w, 721w, 612m, 538m.

(HN(CH₂CH₃)₃)(UO₂)₂(PO₄)(HPO₄) crystallises in the monoclinic space group P21/n. Figures 1.1 and 1.2 show the structure of (HN(CH₂CH₃)₃)(UO₂)₂(PO₄)(HPO₄) looking down the [010] and [100] directions respectively. Selected crystallographic data are given in Table 1.1 (13372 reflections collected (Enraf-Nonius DIP2000 diffractometer, Mo-Kα, 150 K), of which 3272 were independent and 2346 were observed [/ > 5 σ (/)]).

(HN(CH₂CH₃)₃)(UO₂)₂(PO₄)(HPO₄) adopts a layered structure in which the two unique uranium atoms are both co-ordinated in a slightly distorted pentagonal bipyramidal arrangement by seven oxygen atoms. The axial oxygens and the uranium atoms form almost linear (angles of 178.8(4)° and 169.1(3)°) uranyl UO₂²⁺ units with a mean uranium-oxygen distance of 1.77(1) Å with the five equatorial oxygens at a larger mean distance of 2.40(1) A. These values are typical for U(VI) in this coordination environment. Valence sum calculations are consistent with this assignment, giving a calculated uranium valence of 6.9. The local coordination around the uranium atoms is shown in Figure 1.3. Zig-zag PaCl₅ type chains are formed along the [101] direction by UO₂O₅ pentagonal bipyramidal units sharing opposite edges. (UO₂O₅)ₙ chains such as these are a common structural unit found in other uranium oxides and phosphates. Individual chains are cross linked through oxygen atoms of bridging tetrahedral phosphate units to form a corrugated layer structure in the (010) plane. Each phosphate group bonds to a uranium atom in one chain via two oxygen atoms and also bonds to a second uranium atom in an adjacent chain via a third oxygen atom (see figure 1.2). The fourth oxygen of the phosphate group does not bridge but instead projects above and below the phosphate layers. These layers are stacked along the [010] direction and are separated from adjacent layers by charge balancing HN(CH₂CH₃)³⁺ cations to form a structure consisting of alternating inorganic and organic layers. The separation between adjacent phosphate layers is 9.2 Å.

**Table 1.1**

| Selected crystallographic data for the organically templated uranium(VI) phosphates (HN(CH₂CH₃)₃)(UO₂)₂(PO₄)(HPO₄) (**1**), and (N(CH₂CH₂CH₃)₄)(UO₂)₃(PO₄)(HPO₄)₂ (**2**). | | |
|---|---|---|
| | 1 | 2 |
| Chemical Formula | C₆H₁₇U₂P₂O₁₂N | C₁₂H₃₀U₃P₃O₁₈N₁ |
| a, Å | 9.336(4) | 9.401(2) |
| b, Å | 18.325(5) | 13.048(3) |
| c, Å | 9.864(4) | 13.477(1) |
| , deg. | 93.075(5) | 103.164(2) |
| V, Å³ | 1685.1(2) | 1465.4(3) |
| Z | 4 | 2 |
| Space Group | P2₁/n | P -1 |
| Formula Weight | 833.21 | 1283.13 |
| D_{calc}, g cm⁻¹ | 3.26 | 2.84 |
| R | 0.0570 | 0.0564 |
| wR | 0.0650 | 0.0661 |

To maintain charge balance, one of the phosphate groups must be protonated, giving the indicated formula (HN(CH₂CH₃)₃)(UO₂)₂(PO₄)(HPO₄). The infrared spectrum also revealed broad weak bands at 2750 cm-1 and 1620 cm-1 that are consistent with P-OH vibrations. The location of the hydroxyl proton could not be determined from the X-ray analysis, and a consideration of the phosphorus-oxygen distances did not reveal any obviously longer bonds indicative of a P-OH group. The P-O distances range from 1.50(1) Å to 1.56(1) Å with an average of 1.54 Å. However, it seems likely that the proton is located on the terminal (non-bridging) oxygen atoms projecting above and below the layers. Oxygen valence calculations are consistent with this assumption; they indicate that the terminal oxygen atoms have unsatisfied valence. (The average calculated valence for the two terminal oxygens is 1.25, compared with an average calculated valence of 1.88 for the non-terminal oxygen atoms.) However, it is not possible to determine which of the two unique phosphate groups contains the hydroxyl group. It seems likely that the hydrogen is disordered over both sites.

### Thermogravimetric analysis of (HN(CH₂CH₃)₃)(UO₂)₂(PO₄)(HPO₄)

Thermogravimetric analysis revealed that when (HN(CH₂CH₃)₃)(UO₂)₂(PO₄)(HPO₄) is heated in air a small weight loss between room temperature and 100°C occurs, which is attributed to loss of surface water. A much more significant weight loss event is observed at ca. 350°C. This second weight loss is attributed to the combustion of the organic template and its loss from the host structure. Elemental analysis on the calcined materials indicated that there was no carbon or nitrogen present, consistent with the loss of the template. Powder X-ray diffraction showed that the calcined materials were largely amorphous, indicating that the organic template could not be removed from the host material by calcination whilst retaining the integrity of the phosphate framework.

### Example 7

### Ion-Exchange Reactions on (HN(CH₂CH₃)₃)(UO₂)₂(PO₄)(HPO₄)

Ion-exchange reactions were carried out by stirring (HN(CH₂CH₃)₃)(UO₂)₂(PO₄)(HPO₄) in concentrated aqueous solutions of salts (typically halide salts) of the cations that we wished to ion-exchange into the material at a temperature of 60°C for 1-2 days. Powder X-ray diffraction patterns of the materials obtained after reaction with Na⁺ and TMA⁺ (TMA = tetramethylammonium) moieties indicated that the organic template could indeed be exchanged with these cations whilst still retaining the integrity of the uranium phosphate layers. They revealed a decrease in interlayer spacing from 9.2 Å to 8.4 Å and 8.6 Å respectively. Elemental analyses of the carbon and nitrogen content of the ion-exchanged materials indicated that full ion-exchange of the template had occurred; only trace amounts of both were detected in the Na⁺ exchanged material, and a carbon: nitrogen ratio of 4:1 was found in the TMA⁺ exchanged material. (The elemental analyses do not correspond exactly to the expected formulae Na(UO₂)(HPO₄)(PO₄) and (N(CH₃)₄)(UO₂)(HPO₄)(PO₄) because of impurities in the original starting material). Attempts to ion-exchange larger cations than triethylammonium, such as the benzyl-triethyl ammonium cation, did not prove successful. This is to be expected given that decreasing the size of the occluded cation is a thermodynamically favourable process whereas increasing the size of the occluded cation is a thermodynamically disfavoured process.

The successful synthesis of ion-exchanged materials opens the way to synthesising materials in which large cations have been replaced by much smaller cations, to synthesise materials with vacant coordination sites between the layers. Such materials would in particular have application as catalysts.

### Example 8

### Synthesis and Structure of (N(CH₂CH₂CH₃)₄)(UO₂)₃(PO₄)(HPO₄)₂

Single crystals of (N(CH₂CH₂CH₃)₄)(UO₂)₃(PO₄)(HPO₄)₂ were grown by heating mixtures of composition U₃O₈:6H₃PO₄:3N(CH₂CH₂CH₃)₄OH:24OH₂O under autogenous hydrothermal conditions in Teflon-lined autoclaves at 180°C for 1 day. The crystals formed as thin needles together with a small amount of microcrystalline impurity of undetermined composition. A range of initial reaction stoichiometries were studied and each resulted in the formation of the same phase, but the above ratios were found to be optimal for the synthesis of crystals. Unfortunately, the small size of the crystals that formed made separation of the crystals from the powder impurity and the consequent isolation of a pure sample difficult.

Specifically, the synthesis was as follows: A mixture of U₃O₈, H₃PO₄, NPr₄OH and H₂O in the molar ratio 1:6:3:240 was placed in a 23 ml capacity Teflon lined autoclave to a volume fill of about 40% and heated to 180°C at autogenous pressure for 3 days. After cooling to room temperature of 4°C/hr, light green needles of product and a small amount of powder impurity were filtered, washed with water and allowed to dry in air.

(N(CH₂CH₂CH₃)₄)(UO₂)₃(PO₄)(HPO₄)₂ crystallises in the triclinic space group P-1. Figures 1.4 and 1.5 show the structure of (N(CH₂CH₂CH₃)₄)(UO₂)₃(PO₄)(HPO₄)₂ looking down the [01-1] and [100] directions respectively. Selected crystallographic data are given in table 1.1; α = 108.021(3), β = 103.164(2), y = 100.978(4)°, *U* = 1465.4(3) Å³, Z = 2, *D*_{c} = 2.904 g cm⁻³. 10394 reflections collected [Siemens® SMART CCD diffractometer on the single crystal diffraction station (9.8) at the Daresbury Laboratory Synchrotron Radiation Source, UK, λ = 0.6956 Å, 160 Kl, of which 8120 were independent and 5244 were observed [/ > 5σ(/)]. Refinement converged with *R* = 0.0564, *wR* = 0.0661, S = 0.733. CCDC 182/660.

(N(CH₂CH₂CH₃)₄)(UO₂)₃(PO₄)(HPO₄)₂ is also a layered material, and contains layers very similar to those seen in (HN(CH₂CH₃)₃)(UO₂)₂(PO₄)(HPO₄), as can be appreciated from a comparison of figures 1.1 and 1.4. Again, the layers consist of PaCl₅ type (UO₂O₅)ₙ chains formed from edge sharing pentagonal bipyramidal (UO₂O₅) units which are then cross linked by phosphate groups to form uranium phosphate layers in the (01-1) plane. There are three unique uranium atoms in the asymmetric unit. The coordination around all three is again typical for a U(VI) atom in this environment, with a mean uranyl U-O distance of 1.75(1) Å and a mean equatorial U-O distance of 2.40(1) A. Valence sum calculations are consistent with this assignment. Each tetrahedral phosphate group bonds to one uranium atom via two oxygen atoms and another uranium atom in the next (UO₂O₅)ₙ chain via a third oxygen atom. The fourth oxygen atom projects above and below the phosphate layers. Each phosphate layer is separated from the next by intercalated N(CH₂CH₂CH₃)⁴⁺ cations forming alternating inorganic-organic layers along the [01-1] direction. The separation between adjacent phosphate layers is 12.2 Å. Once again, to maintain charge balance the existence of protonated P-OH groups must be inferred. Although the X-ray analysis and a consideration of the P-O distances did not reveal any obvious locations for the P-OH group valence sum calculations indicate that the terminal oxygen atoms are somewhat underbonded. Hence it seems reasonable to assume that the protons are located on these atoms. As in (HN(CH₂CH₃)₃)(UO₂)₂(PO₄)(HPO₄) it is not possible, however, to say on which of the three unique phosphates the hydroxyl group is located.

### Thermogravimetric analysis of (N(CH₂CH₂CH₃)₄)(UO₂)₃(PO₄)(HPO₄)₂

Thermogravimetric analysis showed similar behaviour to that seen for (HN(CH₂CH₃)₃)(UO₂)₂(PO₄)(HPO₄). When the material is heated in air there is a small weight loss between room temperature and ca. 100°C which is attributed to loss of surface water, followed by a much more significant weight loss at ca. 350°C. Elemental analysis on the calcined material indicated that there was no carbon or nitrogen present, which is consistent with the assumption that this weight loss is due to the decomposition of the template. Powder X-ray diffraction showed that the calcined materials were amorphous, indicating that as with (HN(CH₂CH₃)₃)(UO₂)₂(PO₄)(HPO₄) the integrity of the phosphate layers is not retained during the calcination process.

In another version of the Example 8 synthesis, mixtures of Composition U₃O₈ : 6H₃ PO₄ : 3N (CH₂CH₂CH₃)₄OH : 24 H₂O were heated at 180 °C for 3 days. The crystals formed as thin needles together with a small amount of a microcrystalline impurity.

### Example 9

### Synthesis of Other Organically Templated Uranium Phosphates

In addition to N(CH₂CH₃)₃ and N(CH₂CH₂CH₃)⁴⁺ a large variety of other organic amines and quaternary ammonium cations were explored as possible templates for the hydrothermal synthesis of new uranium phosphates, for example NMe₄⁺, NEt₄⁺, C₆H₅NH₂ and C₅H₅N. In all cases new, crystalline materials were successfully synthesised. Powder X-ray diffraction of all these materials showed a series of strong (nominally labelled) 001 reflections, and other much weaker peaks, which is strongly indicative that the synthesised materials are layered phases which exhibit strong preferred orientation effects in powder X-ray measurements. Elemental analyses also indicated the presence of the templates in these materials.

Given the near isostructurality of the layers in the two characterised phases discussed in Examples 6 and 8, and the likelihood that the above materials contain layered phases, it seems reasonable to suppose that the predominant phases in the above materials are analogues of the previously described phases, and contain the same [(UO₂)ₙ(HPO₄)ₙ₋ₘ(PO₄)ₘ]^{m-} layers, but with a different packing arrangement of the organic cations.

### DISCUSSION OF EXAMPLES 6 TO 9

(HN(CH₂CH₃)₃)(UO₂)₂(PO₄)(HPO₄) (1) and (N(CH₂CH₂CH₃)₄)(UO₂)₃(PO₄)(HPO₄)₂ (2) represent the first examples of organically templated layered uranium(VI) phosphates to be isolated, and demonstrate that organic templates can be used to hydrothermally synthesise new hybrid inorganic-organic uranium phosphate materials in which the structure directing organic species is incorporated into the U/P/O framework. Both materials are structurally similar, containing uranium phosphate layers of identical connectivity, but differ in the way in which the organic templating species is packed between the inorganic layers. This is, of course, to be expected given the very different sizes of the HN(CH₂CH₃)³⁺ and N(CH₂CH₂CH₃)⁴⁺ moieties. The differences in packing arrangements also leads to subtle differences in the topologies of the inorganic layers. Although the coordinations of the uranium and phosphate species in both phases are the same, the geometry of the bridging phosphate groups is not, which leads to slight differences in the structures of the layers. The differences are most apparent when both compounds are viewed down the [100] direction. (See figure 1.6). In both compounds there are chains of bridging phosphate groups running along [100] (approx. 45° to the (UO₂O₅)ₙ chains) which have their terminal P-O bonds sticking either 'up' or 'down' from the layers. However, whereas in 1 the direction of those bonds varies in a strictly alternating [all-up:all-down:all-up] manner along the (001) direction, in 2 the alternation is in the sequence [all-up:both up and down:all-down] along [011]. This has the effect that in 1 the layers are corrugated in an approximately sinusoidal manner, whereas in 2 the layers consist of approximately flat sections connected by 'steps'. This effect is shown in figure 1.6.

Although 1 and 2 are the only materials in this family structurally characterised thus far, the method appears to be very general and there is strong evidence that other materials in this family have been successfully synthesised. The differences in the layer structures of (HN(CH₂CH₃)₃)(UO₂)₂(PO₄)(HPO₄) and (N(CH₂CH₂CH₃)₄)(UO₂)₃(PO₄)(HPO₄)₂, subtle though they are, demonstrate that the detailed structures of the inorganic U/P/O layers can be influenced by the precise nature of the organic template used. Given the large number of uranium minerals which display a variety of framework topologies (P C Burns, ML Miller, RC Ewing, *Canad. Miner.,* 1996, **34**, 845) the scope for synthesising new materials in this class displaying novel structural features and useful properties is large.

### Example 10

### Synthesis and Structure of AgUO₂PO₄.3H₂O

AgUO₂PO₄.3H₂O was synthesised as phase pure crystals using hydrothermal techniques very similar to those used to synthesise the above materials (i.e. by reaction of the metal oxides, phosphoric acid and water), although the reaction mixtures were significantly more 'dilute' than those previously described (a molar ratio of U₃O₈:5500H₂O was used).

AgUO₂PO₄.3H₂O is a layered material containing uranium phosphate sheets of a topology which is isotypic to the natural mineral meta-ankoleite, KUO₂PO₄.3H₂O. Each uranium atom is octahedrally co-ordinated to six oxygens, with two short axial uranyl bonds (average U-O(ax) distance = 1.74 Å) and four longer equatorial bonds (average U-O(eq) distance = 2.31 Å). Silver ions and occluded water molecules are located between the anionic layers.

Crystal data: tetrogonal, space group *P*4/ncc (No. 130, origin No. 2), *a=b=*6.928(1)Å, *c*=16.941(7)Å, *V*=813.1(4)Å³, Z=4, F(000)=857.47, T=200K, ρ_{calcd}=4.25 g cm⁻³, µ=215.6 cm⁻¹, DIFABS absorption correction, Enraf-Nonius DIP 2000 diffractometer, λ=0.7107Å, 2376 reflections measured (2Θₘₐₓ=52°) of which 902 were independent and 423 observed [/>5(σ)/], 33 refined parameters, *R*=0.036, *R*_{w}=0.040, residual electron density max./min.2.50/-1.80 e Å⁻³. All atoms, except for the disordered Ag⁺ and water oxygen, were refined anisotropically. A Chebyshev weighting scheme was applied during the refinement, and the data were corrected for the effects of anomalous dispersion and isotropic extinction (via an overall extinction parameter). All crystallographic calculations were performed using the Oxford CRYSTALS system running on a Silicon Graphics Indigo R4000 computer.

As previously stated, the product contains a uranium phosphate sheet topology which is isotypic to the mineral saleeite. The layer structure can be formulated as {[UO_{2/1}O_{4/2}]²⁻[PO_{4/2}]⁺}⁻. Each U⁶⁺ ion is octahedrally co-ordinated to six oxygens with two axial uranyl bonds (U - O(ax,ave) =1.74(2)Å) and four equatorial U-O bonds (U - O(eq,ave) = 2.306(7)Å). Between these anionic layers are found the silver ions and occluded water molecules. It was found, in the same asymmetric unit, that the silver ion and the oxygen of the water molecule occupied the same general position. In order to maintain consistency with the elemental analysis, retain charge balance and avoid any chemically non-sensible Ag-Ag interactions, the silver and oxygen atoms were assigned occupancies of 0.25 and 0.75 respectively. Each Ag⁺ is co-ordinated to three water molecules at distances of 2.650(2)Å, 2.650(2)Å, and 2.367(8)Å. The tri-co-ordinated Ag⁺ is non-planar with O-Ag-O bond angles of 127.90(2)°, 90.0(1)°, and 102.1(2)°. The Ag⁺ ions are staggered within the layer, with the closest Ag⁺•••Ag⁺ distance of 3.72(5)Å. In addition, the water molecules form a two-dimensional hydrogen bonding network connecting the Ag⁺ ions. Combined, the two interactions, Ag⁺ - H₂O and H₂O - H₂O, form a novel 'saw-tooth' structure between the saleeite layers.

AgUO₂PO₄.3H₂O is of interest for two reasons. First, the structure of the silver-water layer is structurally interesting. The Ag⁺ ion is co-ordinated by three water molecules in a highly unusual non-planar geometry with O-Ag-O bond angles of 127.9°, 90.0°, and 102.1°. This represents a rare example of an inorganic material with three co-ordinate Ag, the only other examples being metal-organic compounds. This is despite the fact that the saleeite structure could easily accommodate the Ag⁺ ion in a linear coordination environment (between the uranyl oxygen atoms) which is a much more common coordination geometry for Ag⁺. Second, thermogravimetric analysis of AgUO₂PO₄.3H₂O revealed only one weight loss at ca. 100°C at which point the water is lost from the structure, after which the material is stable at temperatures up to at least 700°C. This is important because in order for materials to be useful catalysts they much be stable at the temperatures generally used for catalysis (ca. 400-800°C). Clearly, AgUO₂PO₄.3H₂O falls into this-category.

### SYNTHESIS OF ORGANICALLY TEMPLATED URANIUM(IV) FLUORIDES

### Example 11

### (H₃N(CH₂)₃NH₃)U₂F₁₀.2H₂O, (H₃N(CH₂)₄NH₃)U₂F₁₀.3H₂O, and (H₃N(CH₂)₆NH₃)U₂F₁₀.2H₂O

In general, the simplest and most effective method of introducing fluorine into the reaction mixture is to use aqueous HF. Therefore, the reaction mixtures used consisted of five components; U₃O₈, phosphoric acid, hydrofluoric acid, an organic template and water. The templates initially chosen for use were straight chain aliphatic diamines, since they were readily available and had previously been shown to result in the formation of novel microporous frameworks, such as ULM-3 and ULM-5.

The reaction of U₃O₈, H₃PO₄, HF, H₂N(CH₂)ₙNH₂ (where n = 3,4,6), and H₂O in the ratio 1:32:32:8:650 under autogenous hydrothermal conditions at 180°C for 1 day, followed by slow cooling at 6°C per hour to room temperature, yielded pure monophasic products of (H₃N(CH₂)₃NH₃)U₂F₁₀.2H₂O, (H₃N(CH₂)₄NH₃)U₂F₁₀.3H₂O, and (H₃N(CH₂)₆NH₃)U₂F₁₀.2H₂O respectively. Both (H₃N(CH₂)₃NH₃)U₂F₁₀.2H₂O and (H₃N(CH₂)₄NH₃)U₂F₁₀.3H₂O formed as bright green, rhomboid shaped single crystals, whereas (H₃N(CH₂)₆NH₃)U₂F₁₀.2H₂O formed as pale green platelets. Subsequently, all three materials have been prepared in higher yields (up to 70% based on uranium) using UO₂ instead of U₃O₈ as the uranium source. Despite the use of phosphoric acid in the reactions no phosphate is found in the final products. However, attempts to make these materials in the absence of phosphoric acid are unsuccessful. It seems likely that the phosphoric acid is playing a necessary role in modifying the pH of the reaction mixture. Elemental analyses of all three compounds, including fluorine analyses, confirmed the absence of phosphorus in the materials and the correctness of the given formulae. Details of the observed and calculated analyses for each compound are given in table 1.5.

The three materials crystallise in the space groups P2₁/c, P-1, and P2₁/c respectively. Selected crystallographic data are given in table 1.3.

**Table 1.3**

| Selected crystallographic data for the organically templated uranium(IV) fluorides (H₃N(CH₂)₃NH₃)U₂F₁₀.2H₂O (1), (H₃N(CH₂)₄NH₃)U₂F₁₀.3H₂O (2), and (H₃N(CH₂)₆NH₃)U₂F₁₀.2H₂O (**3**). | | | |
|---|---|---|---|
| | 1 | 2 | 3 |
| Chemical | C₃H₁₆U₂F₁₀N₂O₂ | C₄H₂₀U₂F₁₀N₂O₃ | C₆H₂₂U₂F₁₀N₂O₂ |
| Formula | | | |
| a, Å | 10.715(1) | 12.024(2) | 13.800(2) |
| b, Å | 7.097(1) | 7.149(3) | 7.056(2) |
| c, Å | 8.767(1) | 8.765(2) | 8.720(3) |
| deg | 90 | 90.063(4) | 90 |
| deg | 93.804(6) | 107.133(5) | 108.338 |
| , deg | 90 | 92.098(3) | 90 |
| V, Å³ | 665.21(1) | 719.49(3) | 805.97(2) |
| Z | 2 | 1 | 2 |
| Space Group | P2₁/c | P -1 | P2₁/c |
| Formula Weight | 778.21 | 810.26 | 820.29 |
| D_{calc}, g cm⁻¹ | 3.80 | 3.65 | 3.36 |
| R | 0.0542 | 0.0805 | 0.0364 |
| wR | 0.0679 | 0.1011 | 0.0465 |

(H₃N(CH₂)₃NH₃)U₂F₁₀.2H₂O, (H₃N(CH₂)₄NH₃)U₂F₁₀.3H₂O and (H₃N(CH₂)₆NH₃)U₂F₁₀. 2H₂O form a strongly related series of compounds, and have many structural features in common. All three are layered materials consisting of negatively charged uranium fluoride layers separated by charge balancing organic cations and occluded water molecules. The structure of the uranium fluoride layers is essentially identical in all three materials. Figure 1.7 shows the structure of a single uranium fluoride layer of (H₃N(CH₂)₃NH₃)U₂F₁₀.2H₂O viewed perpendicularly to the layer (along the [100] direction). Since the layers are virtually identical in all three compounds this view is not shown for the other two materials to avoid repetition. Each uranium atom is bonded to nine fluorine atoms in a tricapped trigonal prismatic coordination. The local geometry around each uranium is shown in figure 1.8. Equivalent UF₉ polyhedra share three edges with three adjacent polyhedra and share a two corners with two additional polyhedra to form uranium fluoride sheets. The ninth fluorine atom of each polyhedron is terminal and projects out of the layers and towards adjacent sheets, but does not connect them. The U-F bond involving the unshared fluorine atom is significantly shorter than the other U-F bonds. Averaged over the three compounds the average U-F distance for a terminal (unshared fluorine) is 2.16 Å (with a range of between 2.13 and 2.18 Å), whereas for the non-terminal fluorines the average U-F distance is 2.35 Å (with a range of 2.28 to 2.44 Å). The identical nature of the layers in each case is reflected in the fact that two of the lattice parameters are almost identical for each compound (see table 1.3) The completely different coordination geometry around the uranium from that seen in (HN(CH₂CH₃)₃)(UO₂)₂(PO₄)(HPO₄) and (NPr₄)(UO₂)₃(PO₄)(HPO₄)₂, and in particular the lack of a uranyl group, suggested that these materials did not contain U(VI), but U(IV). Indeed, a search of the literature revealed that the coordination geometry described above is typical for uranium(IV) halides and oxyhalides, and essentially identical UF₉ polyhedra have been previously seen in compounds such as β-NH₄UF₅, LiUF₅, and KU₂F₉. Of course, if the organic cation is assumed to be doubly protonated it is obvious that the uranium must be in the +4 oxidation state on charge balance grounds.

The uranium fluoride sheets are stacked along the [100] direction in each case and are separated by charge balancing [H₃N(CH₂)ₙNH₃]²⁺ cations and occluded water molecules. Figure 1.9 shows the structure of (H₃N(CH₂)₃NH₃)U₂F₁₀.2H₂O viewed along the [010] direction and shows the location of the occluded template. Figure 1.10 shows a similar view of (H₃N(CH₂)₆NH₃)U₂F₁₀.2H₂O. The structure of (H₃N(CH₂)₄NH₃)U₂F₁₀.3H₂O is very similar and is not shown to avoid repetition. In all three materials the [H₃N(CH₂)ₙNH₃]²⁺ cations lie almost perpendicular to the uranium fluoride layers, at angles of ca. 90°, 85°, and 75° for n = 3, 4, 6 respectively. The layers are bound together via a complex network of strong hydrogen bonds between the substituted ammonium groups and the fluorine atoms of the layers, the oxygen atoms of the water molecules and the fluorines, and the ammonium groups and the water molecules.

**Table 1.4**

| Found and calculated elemental analysis data for the organically templated uranium(IV) fluorides (H₃N(CH₂)₃NH₃)U₂F₁₀.2H₂O (1), (H₃N(CH₄)₃NH₃)U₂F₁₀.2H₂O (**2**), and (H₃N(CH₆)₃NH₃)U₂F₁₀.2H₂O (**3**). | | | |
|---|---|---|---|
| | **1** | **2** | **3** |
| C%, found (calc) | 4.44 (4.63) | 5.86 (5.93) | 7.94 (8.79) |
| H%, found (calc) | 2.05 (2.07) | 2.19 (2.59) | 2.56 (2.70) |
| N%, found (calc) | 3.43 (3.60) | 3.29 (3.46) | 3.10 (3.42) |
| U%, found (calc) | 62.19 (61.17) | 56.73 (58.75) | 56.35 (58.04) |
| F%, found (calc) | 24.20 (24.41) | 23.56 (23.50) | 22.92 (23.17) |
| P%, found (calc) | 0.40 (0.00) | - | 0.58 (0.00) |

In (H₂N(CH₂)₃NH₃)U₂F₁₀.2H₂O the [H₃N(CH₂)₃NH₃]²⁺ cation lies on an inversion centre with the central carbon located on the special crystallographic position. This has the effect of causing the end carbons atoms to be disordered around this position. This disorder was modelled by placing a carbon atom on two sites, each with an occupancy of 0.5 and applying soft constraints to the relevant bond lengths. In (H₃N(CH₂)₄NH₃)U₂F₁₀.3H₂O the lower symmetry of the structure means that there is one complete organic cation in the asymmetric unit and no such problem arises. In (H₃N(CH₂)₆NH₃)U₂F₁₀.2H₂O the organic cation is again centred on the two-fold axis, but in this case the crystallographic special position is located in the middle of central carbon-carbon bond and no disorder is observed in this case.

### Example 12

### Synthesis and Structure of (HN(CH₂CH₂NH₃)₃)U₅F₂₄

As discussed above, the use of straight chain dialkylammonium cations as templates under the above synthetic conditions leads to structures in which each end of the template molecule is bonded strongly to negatively charged uranium fluoride layers. This raised the question of what kind of structures might be formed when differently shaped templates were used, in particular, templates that were less 'one-dimensional'. With this in mind, syntheses were performed in which the approximately pyramidally shaped molecule N(CH₂CH₂NH₂)₃ was used as the template. In an analogous way to the synthesis of the above phases U₃O₈, H₃PO₄, HF, N(CH₂CH₂NH₂)₃, and H₂O in the ratio 1:48:48:8:650 were reacted at 180°C for 1 day, followed by slow cooling at 6°C/hour to room temperature. This yielded large very dark green crystals of (HN(CH₂CH₂NH₃)₃)U₅F₂₄, together with some impurity phases. A higher ratio of acids was found to be necessary for the optimum yield of crystals than for the linear diamine, presumably because of the higher basicity of N(CH₂CH₂NH₂)₃.

(HN(CH₂CH₂NH₃)₃)U₅F₂₄ crystallises in the space group P-1. Selected crystallographic information is given in table 1.5.

**Table 1.5**

| Selected crystallographic data (HN(CH₂CH₂NH₃)₃)U₅F₂₄ (**1**) | |
|---|---|
| | 1 |
| Chemical | C₆H₂₂U₅F₂₄N₄ |
| a, Å | 11.534(2) |
| b, Å | 11.532(4) |
| c, Å | 9.634(2) |
| deg. | 104.034(4) |
| , deg. | 101.112(8) |
| , deg. | 93.922(4) |
| V, Å³ | 1210.9(5) |
| Z | 2 |
| Space Group | P-1 |
| Formula Weight | 1796.37 |
| D_{calc}, g cm⁻¹ | 4.87 |
| R | 0.0612 |
| wR | 0.0819 |

(HN(CH₂CH₂NH₃)₃)U₅F₂₄ is a layered material containing negatively charged layers which are of generally similar structure to those of the materials discussed above, but with some small differences. There are five unique uranium atoms in the asymmetric unit. Three of these are bonded to nine fluorine atoms in the same tricapped trigonal prismatic co-ordination that was seen in (H₃N(CH₂)ₙNH₃)U₂F₁₀.xH₂O, whereas the other two are co-ordinated to just 8 fluorine atoms in a tri-capped trigonal prismatic co-ordination. Each of the UF₉ polyhedra share three edges and two corners with adjacent polyhedra, whereas the UF₈ polyhedra share two edges and three corners. Figure 1.11 is a view of (HN(CH₂CH₂NH₃)₃)U₅F₂₄ along the [10-1) direction and shows the structure of a single [U₅F₂₄]ₙ⁴ⁿ⁻ layer and emphasises the rather complex nature of the layers. The structure of the uranium fluoride sheets are similar to those seen in (H₃N(CH₂)ₙNH₃)U₂F₁₀.xH₂O, but the presence of the 8 co-ordinated uranium atoms leads to some subtle differences, as can be seen from a comparison of figures 1.7 and 1.11. Each uranium atom is bonded to an unshared, terminal fluorine atom which projects above and below the plane of the layers. The U-F bond distance to this atom is significantly shorter than the bond distance to the non-terminal fluorine atoms (U-F_{T} (av) = 2.20 Å, U-F_{NT} (av) = 2.33 Å).

The uranium fluoride sheets stack along the [10-1) direction and are separated by charge balancing (HN(CH₂CH₂NH₃)₃)⁴⁺ cations. The cations are found to reside in an almost flat conformation with the 2-aminoethyl chains lying almost parallel to the plane of the uranium fluoride layers. A complex network of strong hydrogen bonds between all of the nitrogens of the (HN(CH₂CH₂NH₃)₃)⁴⁺ cations and the fluorine atoms in the layers binds the layers together.

### Thermogravimetric Analysis of (H₃N(CH₂)₃NH₃)U₂F₁₀.2H₂O, (H₃N(CH₂)₄NH₃)U₂F₁₀.3H₂O, (H₃N(CH₂)₆NH₃)U₂F₁₀.2H₂O

The thermal behaviours of the materials (H₃N(CH₂)₃NH₃)U₂F₁₀.2H₂O, (H₃N(CH₂)₄NH₃)U₂F₁₀.3H₂O and (H₃N(CH₂)₆NH₃)U₂F₁₀.2H₂O are very similar. When heated in air all three undergo a weight loss of 5-8% between room temperature and 200°C which is attributed to the loss of the occluded water from the materials. Experiments in which the materials were heated to 165°C, then cooled back down to room temperature and allowed to stand in atmospheric air, showed that this water loss is fully reversible, and that the materials re-absorb the lost water from the atmosphere in under an hour. Between the temperatures of ca. 220°C and 350°C the materials undergo a more substantial weight loss of ca. 10%, 11% and 14% for (H3N(CH₂)₃NH₃)U₂F₁₀.2H₂O, (H₃N(CH₂)₄NH₃)U₂F₁₀.3H₂O, and (H3N(CH2)6NH3)U₂F₁₀.2H₂O respectively, which can be attributed to the combustion of the template and its loss from the materials. Immediately following this, a further weight loss of ca. 15% begins which presumably corresponds to decomposition of the uranium fluoride layers and the total collapse of the materials. Powder X-ray diffraction of the calcined materials showed that they were amorphous to X-rays, and elemental analysis confirmed that the calcined products only contained trace amounts of carbon and nitrogen.

When heated in flowing nitrogen, the materials showed very similar behaviour to that seen when they were heated in air. Powder X-ray diffraction of the materials after heating to 800°C in nitrogen again showed that the materials were amorphous, and elemental analysis again showed that template loss had indeed occurred.

### Example 13

### Ion-Exchange Reactions on (H₃N(CH₂)₃NH₃)U₂F₁₀.2H₂O, (H₃N(CH₂)₄NH₃)U₂F₁₀.3H₂O and (H₃N(CH₂)₆NH₃)U₂F₁₀.2H₂O

The negatively charged layers and large interlayer separation in these compounds suggested that they might act as good host materials for cationic ion-exchange applications. The ion-exchange properties of these compounds were therefore investigated by stirring suspensions of the hosts in concentrated solutions of the appropriate metal salts at a temperature of 75°C for 1 day.

In the case of (H₃N(CH₂)₆NH₃)U₂F₁₀.2H₂O the ion-exchange of three different cationic species was attempted: Na⁺, Co²⁺, and TMA⁺ (TMA = tetramethylammonium). Powder X-ray diffraction patterns of the materials obtained after reaction with the Na⁺ and Co²⁺ moieties revealed that in these cases full exchange of the organic template for the metal cations had occurred. In the TMA⁺ case powder X-ray diffraction showed that only partial exchange had occurred. The interlayer separation decreased from 13.8 Å to 7.5 A, 11.0 Å, and 7.6 Å for the Na⁺, Co²⁺ and TMA⁺ exchanged materials respectively. The rather small decrease in interlayer separation in the Co²⁺ exchanged material suggests the possibility of a bilayer structure in which the crystallographic repeat distance in the [100] direction (perpendicular to the layers) is twice the interlayer separation.

Elemental analyses of the Na⁺ and Co⁺ exchanged materials showed only trace amounts of carbon and nitrogen, confirming full exchange. The elemental analysis for the Na⁺ exchanged material conformed well to the expected formula Na₂U₂F₁₀.xH₂O (x = 2). Analysis of the Co²⁺ exchanged material indicated only half the percentage mass of Co expected, implying a formula of Co_{0.5}U₂F₁₀.xH₂O and indicating that only half of the protonated 1,6-diaminohexane molecules have been replaced by Co²⁺ ions. Presumably the small size and high charge of the Co²⁺ ion makes it thermodynamically unfavourable for cations to be located on all of the sites on which the 1,6-diaminohexane molecules formerly resided. In all likelihood the doubling of the a parameter over that which would be expected for the Co²⁺ exchanged material is related to this. To maintain the charge balance of the material it is assumed that some of the occluded water molecules are protonated.

Analysis of the TMA⁺ exchanged material indicated that approximately 1 in 4 of the protonated 1,6-diaminohexane molecules had been exchanged for TMA⁺ cations. It seems likely that given longer reaction times full exchange could be achieved.

For the materials (H₃N(CH₂)₆NH₃)U₂F₁₀.2H₂O and (H₃N(CH₂)₆NH₃)U₂F₁₀.2H₂O only Na⁺ exchange has been attempted. In both cases full exchange was observed, as indicated by both powder X-ray diffraction and elemental analysis of the exchanged materials. The powder X-ray diffraction patterns of the three Na⁺ exchanged compounds were identical, confirming that the same phase, Na₂U₂F₁₀.xH₂O, is produced in each case.

### DISCUSSION OF EXAMPLES 10 TO 13

The compounds (H₃N(CH₂)₃NH₃)U₂F₁₀.2H₂O, (H₃N(CH₂)₄NH₃)U₂F₁₀.3H₂O, (H₃N(CH₂)₆NH₃)U₂F₁₀.2H₂O and (HN(CH₂CH₂NH₃)₃)U₅F₂₄ represent the first examples of organically templated layered uranium(IV) phases to be successfully isolated, and demonstrate how organically templated hydrothermal synthesis can be successfully exploited to synthesise novel actinide-containing phases in which the organic template is incorporated into the inorganic framework. The materials have been demonstrated to reversibly dehydrate when heated, undergo ion-exchange with a variety of other cations, and display weak anti-ferromagnetic properties. Such will display useful catalytic activity, in particular for a variety of redox processes. Structurally, the phases (H₃N(CH₂)ₙNH₃)U₂F₁₀.xH₂O (where n=3,4,6) contain inorganic layers of an identical nature, but the different structure and stoichiometry of the layers in (HN(CH₂CH₂NH₂)₃)U₅F₂₄ shows how the nature of the final phase can be subtly controlled by the use of structure directing species of different size, shape, and charge distribution.

Although the number of templating species used in the Examples is fairly small, the initial results indicate that the formation of these phases is a general reaction. Given the huge variety of possible templates that can be used, both purely organic and otherwise, the scope for the synthesis of new materials with desirable structural, catalytic, ion-exchange and magnetic properties is very large.

One exciting aspect of these uranium(IV) fluoride phases is how the coordination environment of the uranium species has been successfully altered by the fluorine ligands. In contrast to the uranium(VI) phosphates in which the uranium atoms were found only in pentagonal bipyramidal coordination, the uranium coordination in these uranium(IV) fluoride phases appears to be much more flexible. Indeed, in previously known uranium fluoride phases a variety of six, seven, eight, and nine uranium coordination geometries have been observed. Furthermore, although the materials synthesised so far have all been layered phases, these systems appear to offer great promise for the synthesis of open-framework actinide-containing phases. Truly three dimensional open-framework phases can in principle be synthesised by the judicious choice of the correct templating species.

In conclusion, therefore, Examples 6 to 13 describe studies of the hydrothermal synthesis of new actinide-based phases. Several layered phases displaying novel topologies have been successfully synthesised. Both organic and inorganic templating species have been employed to synthesise new uranium(VI) and uranium(IV)-containing phases. These illustrative compounds are listed below, along with a summary of the salient synthetic and physical properties.
- **U**^{**VI**} **compounds**
   (HN(CH₂CH₃)₃)(UO₂)₂(PO₄)(HPO₄):
   - crystals plus impurity phase, but crystals easily separated by sieving
   - TGA measurements indicate template loss at ca. 350°C with loss of crystallinity
   - Template can be fully ion-exchanged for alkali metals and N(CH₃)₄⁺
   (NPr₄)(UO₂)₃(PO₄)(HPO₄)₂:
   - crystals plus impurity phase; crystals are not separated by sieving
   - TGA measurements indicate template loss at ca. 350°C with loss of crystallinity
   - Template can be fully ion-exchanged for alkali metals and N(CH₃)₄⁺
- **U**^{**IV**} **compounds**
   (H₃N(CH₂)₃NH₃)U₂F₁₀.2H₂O, (H₃N(CH₂)₄NH₃)U₂F₁₀.3H₂O and
   (H₃N(CH₂)₆NH₃)U₂F₁₀.2H₂O
   - pure phase crystals as products (yields 70%, based on UO₂)
   - TGA measurements revealed two weight losses; first of H₂O and then of template with loss of crystallinity
   - template can be fully ion-exchanged for alkali metals, Co²⁺, and N(CH₃)₄⁺
   - compounds are paramagnetic with anti-ferromagnetic interactions
   (HN(CH₂CH₂NH₃)₃)U₅F₂₄
   - crystals plus impurity phase; crystals easily separated by sieving

### Example 14

### System: U₃O₈/(NH₄)₂Mo₂O₇/HP/template/H₂O

The above system was subjected to hydrothermal synthesis and the following results obtained:

| Template | Observed Product | Optimised reagent ratios |
|---|---|---|
| Ethylenediamine | very small yellow prismatic crystals | 1:1:20:5:5000 |
| 1,3 diaminopropane | yellow prismatic crystals | 1:5:10:5:5000 |
| 1,4 diaminobutane | yellow rod like crystals | 1:0.3:20:5:5000 |
| 1,6 diaminohexane | golden yellow prismatic crystals | 1:10:20:5:5000 |

All the crystalline products were analysed by raman spectroscopy and showed peaks at 860cm⁻¹, 210cm⁻¹ and 930cm⁻¹ consistent with the presence of a uranyl group in the structure. The presence of uranyl and Mo-O stretching has also been observed in the IR spectra.

Single Crystal X-ray diffraction was performed for the 1,3 diaminopropane templated compound. The structure has been shown to be layered with the template molecules lying between the layers and with a new uranium structure with the layers.

### Example 15

### System: U₃O₈/H₂WO₃/HF/template/H₂O

The above system was subjected to hydrothermal synthesis and the following results obtained:

| Template | Observed Product | Optimised reagent ratios |
|---|---|---|
| Ethylenediamine | yellow prismatic crystals | 20:1:27:1:10000 |
| 1,3 diaminopropane | brown prismatic crystals | 20:1:27:1:10000 |
| 1,4 diaminobutane | orangy brown prismatic crystals | 1:5:20:5:5000 |
| 1,6 diaminohexane | orangy brown plate crystals | 1:5:20:5:5000 |

Characterisation of these compounds was made difficult by tungsten's broad bands in the raman. IR spectra do show the band at 722cm⁻¹ associated with the W-O stretch and the U-O stretch at around 930cm⁻¹.

The structure of the 1,4 compound was investigated by single crystal X-ray diffraction. It was found to have a Keggin type structure.

### OXIDATION REACTIONS

The following reactions are catalysed by a mesoporous uranium phosphate material representative of the actinide-containing molecular sieves of the invention. The material is a layered compound with dodecylamine intercalated between uranium phosphate layers.

The synthesis gel composition is: 1P₂O₅ : 1.2UO₂ (NOₛ)₃ : 1C₁₂H₂₅NH₂ : 80 H₂O. The uranyl nitrate is made by dissolving UO₂ in conc nitric acid; and the phosphorus source is phosphoric acid (85% in water).

The method for preparing the material involves adding the uranyl nitrate to the phosphoric acid and water, followed by stirring this into the dodecylamine. Age for 1 hour then put the gel into an autoclave 2/3 full heat at 100 °C for 24 hours. Quench, wash and filter to give a yellow solid. The procedure follows those of Examples 1 to 4.

The standard conditions for reaction are as follows: 0.1g of catalyst is added to 1ml of organic substrate. 10 ml of hydrogen peroxide (30% aqueous solution) is added at the start (unless otherwise stated) and the mixture is refluxed (unless otherwise stated) for 4 hours (unless otherwise stated). The products were analysed by GCMS and NMR.

### Example 16

1-octene can be converted into carbon dioxide and water (100% yield); or if the reaction temperature is decreased to room temperature heptanal is formed with 57% yield in a reaction time of 2 hours. These reactions are shown below.

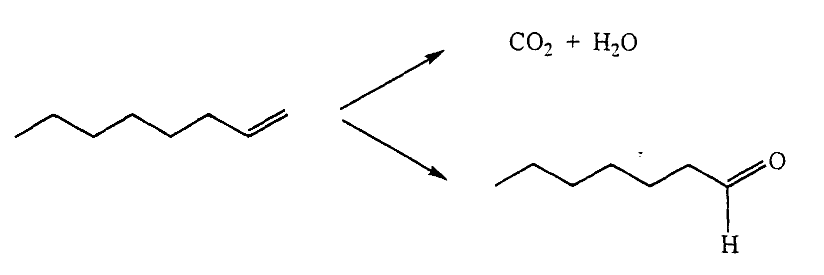

### Example 17

Methyl acrylate has a C=C double bond and an ester function. A number of interesting and valuable molecules can be potentially synthesised from it. Experiments have yielded a symmetrical diol ether; probably by epoxidation of the C = C bond using hydrogen peroxide, followed by ring opening of the epoxide ring by water to form a diol; and nucleophilic attack on the remaining epoxide molecules to yield the product (yield 97%). Careful control of the experimental condition; and "tuning" the catalyst synthesis parameters would probably enable selective synthesis of each of these molecules. The reaction is shown below.

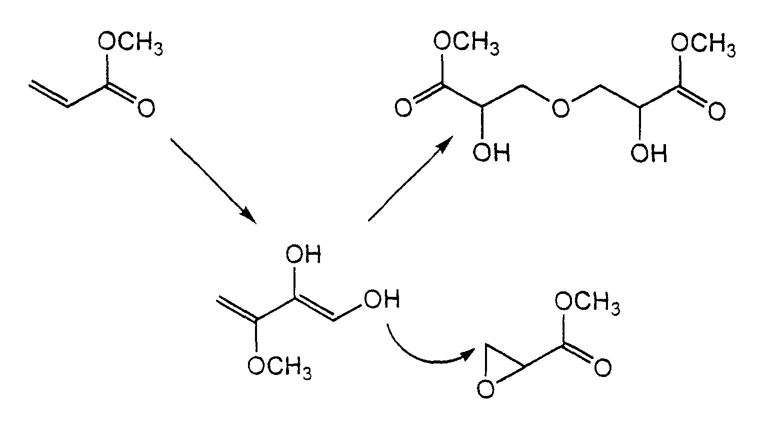

### Example 18

The reaction of allyl alcohol with the catalyst gave a number of products. The conversion of allyl alcohol was low (17%). The products were identified as the epoxide, glycidol; the triol glycerol formed by ring opening with water; and two unknown products which were probably formed by nucleophilic attack by unreacted allyl alcohol molecules on the epoxide molecules to form ether diols. The diagram below illustrates the finding where R is -CH₂CH=CH₂.

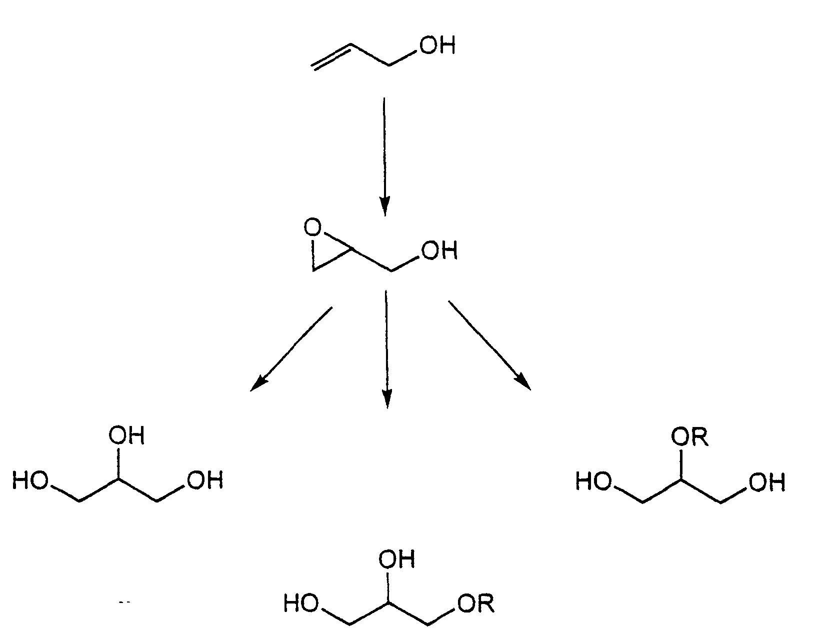

### Example 19

Para-xylene reacts to form a range of products with a conversion of para-xylene of 72%. The products are formed by reaction at one of the methyl groups on the benzene ring but not at the other. The selectivity to each product based upon a conversion of 72% is: 4% 4-methyl phenol (A); 61 % 4-methyl benzaldehyde (B); 19.1% 4-methyl benzylalcohol (C); and 4-methyl benzoic acid (D). This is shown below.

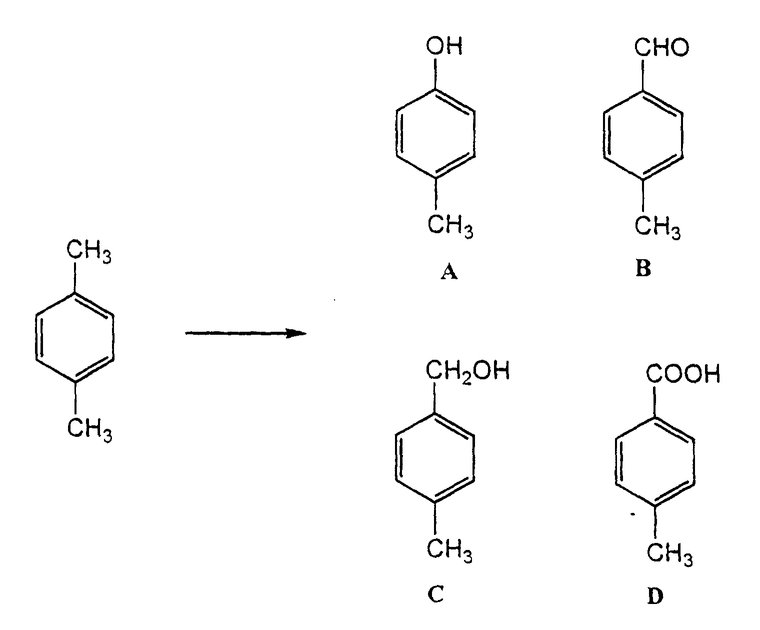

### Example 20

Propan-2-ol reacts to form acetone. The yield is 100%. The acetone does not react any further - this is probably because the hydrogen peroxide supply has been exhausted. The reaction is illustrated below.

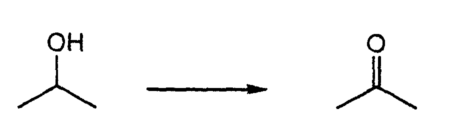

### Example 21

The catalyst oxidised benzaldehyde into benzoic acid (yield 100%) as shown below.

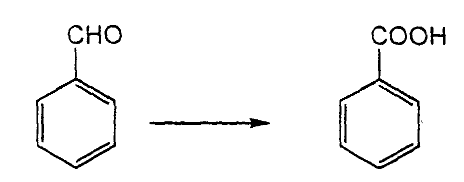

It will be appreciated from the aforegoing that preferred products of the invention are non-aluminosilicate (and more preferably essentially silicate-free) molecular sieves whose frameworks contain cationic actinide (especially uranium) species and anionic species which, typically, at least predominantly are (i) fluoride or (ii) oxoanions which are usually phosphorus oxoanions but which additionally or alternatively may be transition metal oxoanions.

## Claims

1. A molecular sieve material containing an actinide in combination with atoms selected from the group consisting of oxygen, fluorine, phosphorus, transition metals and mixtures thereof.

2. A material of claim 1 which further contains a template species.

3. A material of claim 2 in which the template species comprises an organic template molecule.

4. A material of claim 3 in which the organic template molecules are selected from the group consisting of organic amines.

5. A material of any of claims 1 to 4 which further contains water.

6. A material of any of claims 1 to 5 which contains an actinide in combination with atoms selected from phosphorus, first row transition metals and second row transition metals.

7. A material of any of claims 1 to 5 which contains an actinide in combination with species selected from oxygen, fluorine and oxoanions.

8. A material of claim 7 which contains oxoanions which are phosphorus oxoanions.

9. A material of claim 8 which comprises mixed phosphorus oxoanions.

10. A material of claim 9 in which the mixed phosphorus anions have a P:O ratio of 2:5 and which is substantially free of fluorine.

11. A material of claim 9 or claim 10 which consists essentially only of uranium as oxide, phosphorus, oxygen and water, and in which the uranium:oxygen ratio of the uranium oxide is 2:4.

12. A material of claim 8 in which essentially the only phosphorus oxoanion is orthophosphate, at least a portion of which is optionally as HPO₄²⁻.

13. A material of claim 7 in which the oxoanions comprise transition metal oxoanions.

14. A material of claim 13 in which the transition metals are selected from the group consisting of second row and third row transition metals.

15. A material of claim 14 in which the transition metals are selected from the group consisting of molybdenum and tungsten.

16. A material of any of claims 13 to 15 in which the transition metal oxoanions are obtainable by hydrothermal synthesis from an oxide or oxanion of the transition metal.

17. A material of claim 1 which is a crystalline molecular sieve material having an actinide/heteroatom framework in which the heteroatom is selected from the group consisting of oxygen and fluorine, and mixtures thereof.

18. A material of claim 17 in which the framework additionally contains one or more oxoanions.

19. A material of claim 18 in which the framework is an actinide/phosphorus/ oxygen framework.

20. A material of claim 19 in which the framework is a U/P/O framework.

21. A material of claim 20 in which the U is U(VI).

22. A material of any of claims 19 to 21 in which the P is as a mixed oxide of empirical formula P₂O₅ or is as one or both of PO₄³⁻ and HPO₄²⁻.

23. A material of claim 17 in which the framework is an actinide/F framework which is substantially free of oxygen.

24. A material of claim 23 in which the actinide is tetravalent.

25. A material of claim 23 or claim 24 in which the actinide is U and the U:F ratio is 1:5 or 5:24.

26. A material of any of claims 17 to 25 in which the framework defines cages, pores or interlayer gaps, which cages, pores or interlayer gaps contain organic templates or cationic metal species.

27. A material of claim 26 in which the framework defines interlayer gaps.

28. A material of claim 1 which is a layered structure in which the layers are actinide/transition metal/ oxygen/ optional fluorine layers.

29. A material of claim 28 in which the transition metal is as defined in claim 14 or claim 15.

30. A material of any of claims 1 to 19, 23 or 24 or of any of claims 26 to 29 when dependent on those claims in which the actinide is uranium.

31. A material of any of claims 1 to 30 which is doped with a dopant.

32. A molecular sieve material with the empirical formula:
(X)_{g} (M)ₕ (A)ᵢ(F)ⱼ nH₂O. mT
wherein:
X is AnO₂, AnO₂F₂ or AnF₄ in which An is an actinide metal;
A is an oxoanion or a mixture of oxoanions;
F is fluorine;
T is an organic template or cationic metal species;
M is one or more non-actinide metals;
g, h, i, j, n and m are the mole fractions of X, M, A, F, H₂O and T, respectively, and balance the charge of the material to neutral, and:
g is from 1 to 10
h is from 0 to 10
i is from 0 to 20
j is from 0 to 20
n is 0 or more
m is 0 or more.

33. A material of claim 32 in which both of n and m are from 0 to 20.

34. A material of claim 33 or claim 34 which comprises a layered structure in which layers containing actinide in combination with oxygen and/or fluorine have organic templates and/or cationic metal species located between them.

35. A material of any of claims 32 to 34 in which X is AnO₂, A is a phosphorus oxoanion and j is O.

36. A material of claim 35 in which A is orthophosphate.

37. A material of claim 35 or claim 36 in which a portion of the oxoanions are protonated.

38. A material of any of claims 32 to 37 which is a layered structure and in which the layers are of the formula:
[ (AnO₂)_{g} (HPO₄)_{g-p} (PO₄)ₚ]^{p-},
in which An is a hexavalent metal.

39. A material of claim 38 in which the hexavalent metal is U(VI).

40. A material of claim 38 or claim 39 in which g is 2 and p is 1 or g is 3 and p is 1.

41. A material of any of claims 32 to 34 in which X is AnF₄ and preferably UF₄, i is 0 and j is at least 2.

42. A material of claim 41 in which j is 2.

43. A material of claim 41 or claim 42 which comprises a layered structure in which the layers are of the formula An₂F₁₀, in which An is a tetravalent metal.

44. A material of claim 43 in which An is U(IV).

45. A material of any of claims 32 to 34 in which X is AnO₂, A is a phosphorus oxoanion, j is 0 and M is a monovalent metal ion.

46. A material of claim 45 in which X is UO₂²⁺.

47. A material of claim 45 or claim 46 in which A is a orthophosphate.

48. A material of any of claims 45 to 47 in which M is Ag⁺.

49. A material as claimed in claim 33 which has a layered structure comprising layers of formula (X)ₓ (M)ᵥ (A)_{z} (F)_{w} and, optionally, organic templating agent between the layers.

50. A material as claimed in claim 33 or claim 49, wherein An is uranium.

51. A material as claimed in any of claims 33, 49 and 50, wherein A is HPO₄, PO₄, HPO₃F, HAₛO₄, HAsO₃F, AsO₃F or a mixture thereof.

52. A material as claimed in any of claims 33 and 49 to 51, wherein T is R¹R²R³R⁴N⁺ wherein R¹, R², R³ and R⁴ are independently selected from hydrogen, C₁ to C₁₈ alkyl, C₆ to C₁₀ aryl and alkaryl, optionally substituted with one or more C₁ to C₁₈ alkyl groups, or T is a quaternary ion formed by the N-alkylation with a C₁ to C₁₈ alkyl group of a saturated or unsaturated, aromatic or non-aromatic, monocyclic or polycyclic, bridged or unbridged, nitrogen-containing heterocyclic ring.

53. A material as claimed in any of claims 33 and 49 to 52, wherein M is potassium, silver, zinc, cadmium or tellurium.

54. A material as claimed in any one of claims 33 and 49 to 51, wherein y and m are both zero.

55. A material as claimed in claim 33, which has a layered structure and the empirical formula (UO₂)ₓ (PO₄)_{z} (HPO₄)_{z'} (T)ₘ wherein x, z, z', and m are: 2, 1, 1 and 1; and 3, 1, 2, and 1, respectively.

56. A material of any of claims 33 and 49 to 55 which has a pore size or interlayer spacing of less than 20 Å.

57. A method of performing a cation exchange or absorption procedure, comprising contacting a solution containing a dissolved cation with a material of any of the preceding claims.

58. A method of oxidising an organic compound, comprising contacting the compound with a material of any of claims 1 to 56 and an oxidant for a time and at a temperature sufficient for the oxidation to occur.

59. A method of claim 58 wherein the oxidant is hydrogen peroxide or another peroxide.

60. A method of claim 58 or claim 59 in which the organic compound comprises an alcoholic hydroxy group which is oxidised to a ketone or aldehyde, which in turn is optionally further oxidised to a carboxyl group.

61. A method of claim 58 or claim 59 in which the organic compound comprises a ketonic carbonyl group which is oxidised to a carboxyl group.

62. A method of claim 58 or claim 59 in which the organic compound comprises a C = C double bond which is oxidised to an epoxide, which is optionally further reacted, for example by ring opening.

63. A method of claim 58 or claim 59 in which the organic compound comprises an optionally substituted alkyl moiety substituted onto an aryl group, which alkyl moiety is oxidised to -OH, -CHO, -CH₂OH and/or -COOH.

64. A method of any of claims 58 to 63 which further comprises subjecting the oxidised compound to one or more additional steps.

65. The use of a material of any of claims 1 to 56 as a catalyst (for example in a redox reaction), an ion exchange material or an absorbent.

66. The use of claim 65 in which the material is used as an oxidation catalyst and the substrate comprises an alkylphenyl moiety, a C = C double bond, an alcoholic hydroxy group or a ketonic or aldehydic carbonyl group.

67. A molecular sieve material containing an actinide together with
(a) phosphorus atoms or atoms of a first or second row transition metal;
(b) oxygen and/or fluoride, and optionally at least one oxoanion; or
(c) oxygen and/or fluorine, and at least one transition metal oxo species.

68. A molecular sieve material having a framework consisting essentially of an actinide in combination with (i) fluorine or (ii) oxygen and an oxoanion, the framework defining pores containing a template species and optionally water.

69. A material of claim 68 in which the oxoanion is a phosphorus or transition metal oxoanion.

## Patentansprüche

1. Ein Molekularsiebmaterial, enthaltend ein Actinid in Kombination mit Atomen ausgewählt aus der Gruppe bestehend aus Sauerstoff, Fluor, Phosphor, Übergangsmetallen und deren Mischungen.

2. Ein Material nach Anspruch 1, das weiterhin eine Templatspezies enthält.

3. Ein Material nach Anspruch 2, in welchem die Templatspezies ein organisches Templatmolekül umfasst.

4. Ein Material nach Anspruch 3, in welchem die organischen Templatmoleküle aus der Gruppe der organischen Amine ausgewählt sind.

5. Ein Material nach einem der Ansprüche 1 bis 4, das weiterhin Wasser enthält.

6. Ein Material nach einem der Ansprüche 1 bis 5, das ein Actinid in Kombination mit Atomen ausgewählt aus Phosphor, Übergangsmetallen der ersten Reihe und Übergangsmetallen der zweiten Reihe, enthält.

7. Ein Material nach einem der Ansprüche 1 bis 5, das ein Actinid in Kombination mit Spezies ausgewählt aus Sauerstoff, Fluor und Oxoanionen, enthält.

8. Ein Material nach Anspruch 7, das Oxcanionen enthält, welche Phosphor-Oxoanionen sind.

9. Ein Material nach Anspruch 8, das gemischte Phosphor-Oxoanionen umfasst.

10. Ein Material nach Anspruch 9, in welchem die gemischten Phosphor-Oxoanionen ein P:O-Verhältnis von 2:5 haben und das im wesentlichen fluorfrei ist.

11. Ein Material nach Anspruch 9 oder 10, das im wesentlichen nur aus Uran in Form seines Oxids, Phosphor, Sauerstoff und Wasser besteht und in welchem das Uran:Sauerstoff-Verhältnis des Uranoxids 2:4 ist.

12. Ein Material nach Anspruch 8, in welchem in wesentlichen das einzige Phosphor-Oxoanion Orthophosphat ist und wenigstens ein Teil davon optional HPO₄²⁻ ist.

13. Ein Material nach Anspruch 7, in welchem die Oxoanionen Übergangsmetall-Oxoanionen umfassen.

14. Ein Material nach Anspruch 13, in welchem die Übergangsmetalle aus der Gruppe der Übergangsmetalle der zweiten und der dritten Reihe ausgewählt sind.

15. Ein Material nach Anspruch 14, in welchem die Übergangsmetalle aus der Gruppe bestehend aus Molybdän und Wolfram ausgewählt sind.

16. Ein Material nach einem der Ansprüche 13 bis 15, in welchem die Übergangsmetall-Oxoanionen durch hydrothermale Synthese aus einem Oxid oder Oxanion des Übergangsmetalls erhältlich sind.

17. Ein Material nach Anspruch 1, das ein kristallines Molekularsiebmaterial ist, welches ein Actinid/Heteroatom-Gerüst aufweist, in welchem das Heteroatom aus der Gruppe bestehend aus Sauerstoff und Fluor und deren Mischungen, ausgewählt ist.

18. Ein Material nach Anspruch 17, in welchem das Gerüst zusätzlich ein oder mehrere Oxoanionen enthält.

19. Ein Material nach Anspruch 18, in welchem das Gerüst ein Actinid/Phosphor/Sauerstoff-Gerüst ist.

20. Ein Material nach Anspruch 19, in welchem das Gerüst ein U/P/O-Gerüst ist.

21. Ein Material nach Anspruch 20, in welchem U U(VI) ist.

22. Ein Material nach einem der Ansprüche 19 bis 21, in welchem P als ein gemischtes Oxid der empirischen Formel P₂O₅ vorliegt oder einzeln oder gemeinsam als PO₄³⁻ oder HPO₄²⁻ vorliegt.

23. Ein Material nach Anspruch 17, in welchem das Gerüst ein Actinid/F-Gerüst ist, das weitestgehend sauerstofffrei ist.

24. Ein Material nach Anspruch 23, in welchem das Actinid vierwertig ist.

25. Ein Material nach Anspruch 23 oder Anspruch 24, in welchem das Actinid U ist und das U:F-Verhältnis 1:5 oder 5:24 ist.

26. Ein Material nach einem der Ansprüche 17 bis 25, in welchem das Gerüst Käfige, Poren oder Zwischenschichthohlräume umgrenzt, wobei die Käfige, Poren oder Zwischenschichthohlräume organische Template oder kationische Metallspezies enthalten.

27. Ein Material nach Anspruch 26, in welchem das Gerüst Zwischenschichthohlräume umgrenzt.

28. Ein Material nach Anspruch 1, das eine Schichtstruktur ist, in welcher die Schichten Actinid/Übergangsmetall/Sauerstoff/- und optional Fluor-Schichten sind.

29. Ein Material nach Anspruch 28, in welchem das Übergangsmetall wie in Anspruch 14 oder 15 definiert ist.

30. Ein Material nach einem der Ansprüche 1 bis 19, 23 oder 24 oder nach einem der Ansprüche 26 bis 29, wenn von diesen Ansprüchen abhängig, in denen das Actinid Uran ist.

31. Ein Material nach einem der Ansprüche 1 bis 30, das mit einem Zusatzstoff versetzt ist.

32. Ein Molekularsiebmaterial mit der empirischen Formel:
(X)_{g} (M)ₕ (A)ᵢ(F)_{J} nH₂O. mT
worin:
X AnO₂, AnO₂F₂ oder AnF₄ ist, in welchem An ein Actinidmetall ist;
A ein Oxoanion oder eine Mischung von Oxoanionen ist; F Fluor ist;
T ein organisches Templat oder eine kationische Metallspezies ist;
M ein oder mehrere Nicht-Actinidmetalle bedeutet;
g, h, i, j, n und m sind die jeweiligen Stoffmengenanteile X, M, F, H₂O und T und gleichen die Ladung des Materials zur Neutralität aus und:
g von 1 bis 10 ist
h von 0 bis 10 ist
i von 0 bis 20 ist
j von 0 bis 20 ist
n 0 oder größer ist
m 0 oder größer ist.

33. Ein Material nach Anspruch 32, in dem sowohl n als auch m 0 bis 20 sind.

34. Ein Material nach Anspruch 33 oder 34, das eine Schichtstruktur umfasst, in welcher sich zwischen den Schichten, welche Actinide in Kombination mit Sauerstoff und/oder Fluor enthalten, organische Template und/oder kationische Metallspezies befinden.

35. Ein Material nach einem der Ansprüche 32 bis 34, in welchem X AnO₂, A ein Phosphor-Oxoanion und j 0 ist.

36. Ein Material nach Anspruch 35, in welchem A Orthophosphat ist.

37. Ein Material nach Anspruch 35 oder Anspruch 36, in welchem ein Anteil der Oxoanionen protoniert ist.

38. Ein Material nach einem der Ansprüche 32 bis 37, welches eine Schichtstruktur aufweist und in welchem die Schichten die Formel:
[ (AnO₂)_{g}(HPO₄)_{g-p}(PO₄)ₚ]^{p-}
besitzen,
in welcher An ein sechswertiges Metall ist.

39. Ein Material nach Anspruch 38, in welchem das sechswertiges Metall U(VI) ist.

40. Ein Material nach Anspruch 38 oder Anspruch 39, in welchem g 2 und p 1 ist oder g 3 und p 1 ist.

41. Ein Material nach einem der Ansprüche 32 bis 34, in welchem X AnF₄ vorzugsweise UF₄ ist, i 0 und j mindestens 2 ist.

42. Ein Material nach Anspruch 41, in welchem j 2 ist.

43. Ein Material nach Anspruch 41 oder Anspruch 42, welches eine Schichtstruktur umfasst, in welcher die Schichten die Formel An₂F₁₀ besitzen, wobei An ein vierwertiges Metall ist.

44. Ein Material nach Anspruch 43, in welchem An U(IV) ist.

45. Ein Material nach einem der Ansprüche 32 bis 34, in welchem X AnO₂ ist, A ein Phosphor-Oxoanion ist, j 0 ist und M ein einwertiges Metallion ist.

46. Ein Material nach Anspruch 45, in welchem X UO₂²⁺ ist.

47. Ein Material nach Anspruch 45 oder Anspruch 46, in welchem A ein Orthophosphat ist.

48. Ein Material nach einem der Ansprüche 45 bis 47, in welchem M Ag⁺ ist.

49. Ein Material gemäß Anspruch 33, welches eine Schichtstruktur hat, welche Schichten der Formel (X)ₓ (M)ᵥ (A)_{z} (F)_{w} umfasst und optional organische Template bildende Agenzien zwischen den Schichten aufweist.

50. Ein Material gemäß Anspruch 33 oder 49, worin An Uran ist.

51. Ein Material gemäß einem der Ansprüche 33, 49 und 50, worin A HPO₄, PO₄, HPO₃F, HAₛO₄, HAsO₃F oder deren Mischungen ist.

52. Ein Material gemäß einem der-Ansprüche 33 und 49 bis 51, worin T R¹R²R³R⁴N⁺ ist, worin R¹, R², R³ und R⁴ unabhängig von einander ausgewählt sind aus Wasserstoff, C₁- bis C₁₈-Alkyl, C₆- bis C₁₀-Aryl und Alkaryl, optional substituiert sind mit einer oder mehrerer C₁- bis C₁₈-Alkylgruppen, oder T ein quartäres Ion ist, gebildet durch N-Alkylierung mit einer C₁- bis C₁₈-Alkylgruppe eines gesättigten oder ungesättigten, aromatischen oder nicht-aromatischen, monocyclischen oder polycyclischen, überbrückten oder nicht-überbrückten, Stickstoff enthaltenden heterocyclischen Rings.

53. Ein Material gemäß einem der Ansprüche 33 und 49 bis 52, worin M Kalium, Silber, Zink, Cadmium oder Tellur ist.

54. Ein Material gemäß einem der Ansprüche 33 und 49 bis 51, worin y und m jeweils 0 sind.

55. Ein Material gemäß Anspruch 33, welches eine Schichtstruktur und die empirische Formel
(UO₂)ₓ (PO₄)_{z} (HPO₄)_{z'} (T)ₘ
hat, worin x, z, z' und m 2, 1, 1 und 1; beziehungsweise 3, 1, 2 und 1 sind.

56. Ein Material nach einem der Ansprüche 33 und 49 bis 55, welches eine Porengröße oder Zwischenschichthohlräume von weniger als 20 Å aufweist.

57. Ein Verfahren zur Durchführung eines Kationenaustausches oder ein Absorptionsverfahren, umfassend das in Kontakt bringen einer Lösung eines gelösten Kations mit einem Material gemäß einem der vorangehenden Ansprüche.

58. Ein Verfahren zur Oxidation einer organischen Verbindung, umfassend das in Kontakt bringen der Verbindung mit einem Material gemäß einem der Ansprüche 1 bis 56 und einem Oxidationsmittel, für einen Zeitraum und bei einer Temperatur, ausreichend um die Oxidation stattfinden zu lassen.

59. Ein Verfahren nach Anspruch 58, worin das Oxidationsmittel Wasserstoffperoxid oder ein anderes Peroxid ist.

60. Ein Verfahren nach Anspruch 58 oder Anspruch 59, in welchem die organische Verbindung eine alkoholische Hydroxygruppe umfasst, welche zu einem Keton oder Aldehyd oxidiert wird, welche gegebenenfalls dann wieder zu einer Carbonylgruppe weiter oxidiert wird.

61. Ein Verfahren nach Anspruch 58 oder Anspruch 59, in welchem die organische Verbindung eine Ketocarbonylgruppe umfasst, welche zu einer Carboxlygruppe oxidiert wird.

62. Ein Verfahren nach Anspruch 58 oder Anspruch 59, in welchem die organische Verbindung eine C=C-Doppelbindung umfasst, die zu einem Epoxid oxidiert wird, welches optional weiter umgesetzt wird, beispielsweise unter Ringöffnung.

63. Ein Verfahren nach Anspruch 58 oder Anspruch 59, in welchem die organische Verbindung einen an eine Aryl-Gruppe substituierten Alkyl-Teil umfasst, welcher gegebenenfalls substituiert ist, wobei der Alkyl-Teil zu -OH, -CHO, -CH₂OH und/oder -COOH oxidiert wird.

64. Ein Verfahren nach einem der Ansprüche 58 bis 63, welches weiterhin das Unterwerfen der oxidierten Verbindung einer oder mehrerer zusätzlicher Stufen umfasst.

65. Die Verwendung eines Materials nach einem der Ansprüche 1 bis 56 als Katalysator (beispielsweise in einer Redoxreaktion), Ionenaustauschermaterial oder Absorbens.

66. Die Verwendung gemäß Anspruch 65, in welchem das Material als Oxidationskatalysator verwendet wird und das Substrat einen Alkyphenyl-Teil, eine C=C-Doppelbindung, eine alkoholische Hydroxygruppe oder eine ketonische oder aldehydische Carbonylgruppe umfasst.

67. Ein Molekularsiebmaterial, enthaltend ein Actinid zusammen mit
(a) Phosphoratomen oder Atomen der ersten oder zweiten Reihe der Übergangsmetalle;
(b) Sauerstoff und/oder Fluorid und gegebenenfalls mindestens einem Oxoanion; oder
(c) Sauerstoff und/oder Fluor und mindestens einer Übergangsmetall-Oxospezies.

68. Ein Molekularsiebmaterial, welches ein Gerüst aufweist, das im Wesentlichen aus einem Actinid in Kombination mit (i) Flur oder (ii) Sauerstoff und einem Oxoanion besteht, und das Gerüst Poren umgrenzt, welche eine Templat-Spezies und gegebenenfalls Wasser enthalten.

69. Ein Material nach Anspruch 68, in welchem das Oxoanion ein Phosphor- oder Übergangsmetall-Oxoanion ist.

## Revendications

1. Matériau de tamis moléculaire contenant une actinide en combinaison avec des atomes choisis parmi le groupe consistant en oxygène, fluor, phosphore, métaux de transition et mélange de ces derniers.

2. Matériau selon la revendication 1, caractérisé en ce qu'il contient en outre une espèce gabarit.

3. Matériau selon la revendication 2, caractérisé en ce que l'espèce gabarit comprend une molécule gabarit organique.

4. Matériau selon la revendication 3, caractérisé en ce que les molécules gabarit organiques sont choisies parmi le groupe consistant en des aminés organiques.

5. Matériau selon l'une des revendications 1 à 4, caractérisé en ce qu'il contient en outre de l'eau.

6. Matériau selon l'une des revendications 1 à 5, caractérisé en ce qu'il contient un actinide en combinaison avec des atomes choisis parmi phosphore, métaux de transition de premier rang et des métaux de transition de second rang.

7. Matériau selon la revendication 7, caractérisé en ce qu'il contient un actinide en combinaison avec des espèces choisies parmi oxygène, fluor et oxoanions.

8. Matériau selon la revendication 7, caractérisé en ce qu'il contient des oxoanions qui sont des oxoanions phosphores.

9. Matériau selon la revendication 8, caractérisé en ce qu'il comporte des oxoanions phosphores mélangés.

10. Matériau selon la revendication 7, caractérisé en ce que les anions phosphores mélangés ont un rapport P:O de 2 à 5 et en ce qu'il est sensiblement libre de fluor.

11. Matériau selon l'une des revendications 9 ou 10, caractérisé en ce qu'il est constitué essentiellement seulement d'uranium en tant qu'oxyde, phosphore oxygène et eau, et dans lequel le rapport uranium/oxygène de l'oxyde d'uranium est de 2 à 4.

12. Matériau selon la revendication 8, caractérisé en ce que principalement le seul oxoanion de phosphore est un orthophosphate, au moins une partie duquel est en option du HPO₄²⁻.

13. Matériau selon la revendication 7, caractérisé en ce que les oxoanions comportent des oxoanions de métaux de transition.

14. Matériau selon la revendication 13, caractérisé en ce que les métaux de transition sont choisis parmi le groupe consistant en des métaux de transition de second rang et de troisième rang.

15. Matériau selon la revendication 14, caractérisé en ce que les métaux de transition sont choisis parmi le groupe consistant en molybdène et tungstène.

16. Matériau selon l'une des revendications 13 à 15, caractérisé en ce que les oxoanions de métaux de transition sont obtenus par synthèse hydrothermale à partir d'un oxyde ou oxoanion de métaux de transition.

17. Matériau selon la revendication 1, caractérisé en ce qu'un matériau de tamis moléculaires cristallines ayant une structure actinide/hétéroatome dans lequel l'hétéroatome est choisi parmi le groupe consistant en oxygène et fluor, et mélange de ceux-ci.

18. Matériau selon la revendication 17, caractérisé en ce que la structure contient de manière additionnelle un ou plusieurs oxoanions.

19. Matériau selon la revendication 18, caractérisé en ce que la structure est une structure actinide/phosphore/oxygène.

20. Matériau selon la revendication 19, caractérisé en ce que la structure est une structure U/P/O.

21. Matériau selon la revendication 20, caractérisé en ce que U est U(VI).

22. Matériau selon l'une des revendications 19 à 21, caractérisé en ce que P est un oxyde mélangé de formule empirique P₂O₅, ou l'un ou les deux de PO₄³⁻ et HPO₄²⁻.

23. Matériau selon la revendication 17, caractérisé en ce que la structure est une structure actinide/F qui est sensiblement libre d'oxygène.

24. Matériau selon la revendication 23, caractérisé en ce que l'actinide est tétravalent.

25. Matériau selon l'une des revendications 23 ou 24, caractérisé en ce que l'actinide est U et le rapport U:F est de 1 à 5 ou de 5 à 24.

26. Matériau selon l'une des revendications 17 à 25, caractérisé en ce que la structure définit des cages, pores, espaces inter couches, lesquels cages, pores et espaces inter couches contiennent des gabarits organiques d'espèces métalliques cationiques.

27. Matériau selon la revendication 26, caractérisé en ce que la structure définit des espaces inter couches.

28. Matériau selon la revendication 1, caractérisé en ce qu'une structure à couches dans laquelle les couches sont des couches actinide/métaux de transition/oxygène/fluor en option.

29. Matériau selon la revendication 28, caractérisé en ce que le métal de transition est définit dans la revendication 14 ou 15.

30. Matériau selon l'une des revendications 1 à 19, 23 ou 24, ou l'une des revendications 26 à 29, lorsqu'elles sont dépendantes de ces revendications, caractérisé en ce que l'actinide est de l'uranium.

31. Matériau selon l'une des revendications 1 à 30, caractérisé en ce qu'il est dopé avec un dopant.

32. Matériau de tamis moléculaires ayant la formule empirique :
(X)_{g} (M)ₕ (A)ᵢ(F)ⱼ nH₂O. mT
où
X est AnO₂, AnO₂F₂ ou AnF₄ dans lequel An est un métal actinide ;
A est un oxoanion ou un mélange d'oxoanions ;
F est du fluor ;
T est un gabarit organique ou une espèce métallique cationique ;
M est un ou plusieurs métaux non actinide ;
g, h, i, j n et m sont des fractions de mole de X, M, A, F, H₂O et T, respectivement, et le reste est la charge du matériau pour être neutre, et :
g est de 1 à 10
h est de 0 à 10
i est de 0 à 20
j est de 0 à 20
n est de 0 ou plus
m est de 0 ou plus.

33. Matériau selon la revendication 32, caractérisé en ce qu'à la fois n et m sont de 0 à 20.

34. Matériau selon la revendication 32 ou 33, caractérisé en ce qu'il comporte une structure à gauche dans laquelle les couches contiennent de l'actinide en combinaison avec de l'oxygène et/ou du fluor avec des gabarits organiques et/ou des espèces métalliques cationiques disposées entre ces dernières,

35. Matériau selon l'une des revendications 32 à 34 dans lequel X est AnO₂, A est un oxoanion de phosphore et j est O.

36. Matériau selon la revendication 35, caractérisé en ce que A est un orthophosphate.

37. Matériau selon la revendication 35 ou 36, caractérisé en ce qu'une partie des oxoanions ont été soumis à protonation.

38. Matériau selon l'une des revendications 32 à 37, caractérisé par une structure à couches et dans lequel les couches sont de formule :
[(AnO₂)_{g} (HPO₄)_{g-p} (PO₄)ₚ]^{p-},
dans lequel An est un métal héxavalent.

39. Matériau selon la revendication 38, caractérisé en ce que le métal héxavalent est U(VI).

40. Matériau selon la revendication 38 ou 39, caractérisé en ce que g est 2 et p est 1 ou g est 3 et p est 1.

41. Matériau selon l'une des revendications 32 à 34, dans lequel X est AnF₄ et de préférence UF₄, i est 0 et j est au moins 2.

42. Matériau selon la revendication 41, caractérisé en ce que j est 2.

43. Matériau selon la revendication 41 ou 42, qui comporte une structure à couches dans laquelle les couches sont de formule An₂F_{10,} dans lequel An est un métal tétravalent.

44. Matériau selon la revendication 43, dans lequel An est U(IV).

45. Matériau selon l'une des revendications 32 à 34, dans lequel X est AnO₂, A est un oxoanion phosphore, j est O et M est un ion métallique monovalent.

46. Matériau selon la revendication 45, caractérisé en ce que X est UO2²⁺.

47. Matériau selon la revendication 45 ou 46, caractérisé en ce que A est un orthophosphate.

48. Matériau selon l'une des revendications 45 à 47, caractérisé en ce que M est Ag⁺.

49. Matériau selon la revendication 33, qui présente une structure à couches comprenant des couches de formule (X)ₓ (M)ᵥ (A)_{z} (F)_{w} et, de manière optionnelle, un agent de gabarit organique, entre les couches.

50. Matériau selon la revendication 33 ou 49, caractérisé en ce que An est de l'uranium.

51. Matériau selon la revendication 33, 49 et 50, caractérisé en ce que A est HPO₄, PO₄, HPO₃F, HaₛO₃F, AₛO₃F, ou un mélange de ceci.

52. Matériau selon l'une des revendications 33, 49 à 51, caractérisé en ce que T est R₁R₂R₃R₄N⁺ où R₁, R₂, R₃ et R₄ sont indépendamment choisis parmi hydrogène, C₁ à C₁₈ alkyle, C₆ à C₁₀ aryle et alkaryle, optionnellement substitués avec un ou plusieurs C₁ à C₁₈ groupes alkyle, ou T est un ion quaternaire formé par la N-alkylation avec un C₁ à C₁₈ groupe alkyle, d'un anneau hétérocyclique saturé ou insaturé, aromatique ou non aromatique, monocyclique ou polycyclique, ponté ou non ponté, contenant de l'azote,

53. Matériau selon l'une des revendications 33 et 49 à 52, caractérisé en ce que M est du potassium, de l'argent, du zinc, du cadmium ou tellurium.

54. Matériau selon l'une des revendications 33 et 49 à 51, caractérisé en ce que y et m sont tous les deux égaux à 0.

55. Matériau selon la revendication 33, qui présente une structure à couches et de formule empirique (U02)x (PO4)z (HPO4)z' (T)m où x, z, z' sont : 2, 1, 1 et 1 ; et 3, 1, 2 et *1,* respectivement.

56. Matériau selon l'une des revendications 33 et 49 à 55, qui présente une taille de pore ou d'espacement entre couches, de moins de 20 Å.

57. Procédé pour réaliser un échange de cations ou procédé d'absorption, comprenant mettre en contact une solution contenant un cation dissout avec un matériau selon l'une des revendications précédentes.

58. Procédé d'oxydation d'un composé organique, comprenant ta mise en contact du composé avec un matériau selon l'une des revendications 1 à 56, et un oxydant pour une durée et à une température suffisante pour permettre à l'oxydation d'apparaître.

59. Procédé selon la revendication 59, caractérisé en ce que l'oxydant est un peroxide d'hydrogène ou un autre peroxide.

60. Procédé selon la revendication 58 ou 59, caractérisé en ce que le composé organique comporte un groupe hydroxy alcoolique oxydé vers un kétone ou aldéhyde, qui à son tour est optionnellement de plus oxydé vers un groupe carboxyle.

61. Procédé selon la revendication 58 ou 59, caractérisé en ce que le composé organique comporte un groupe carbonyle kétonique qui est oxydé vers un groupe carboxyle.

62. Procédé selon la revendication 58 ou 59, caractérisé en ce que le composé organique comporte une liaison double C=C, qui est oxydé vers un époxide, qui est optionnellement de plus mis en réaction, par exemple par ouverture d'anneau.

63. Procédé selon la revendication 58 ou 59, caractérisé en ce que le composé organique comporte un demi alkyle optionnellement substitué sur un groupe aryle, lequel le demi alkyle est oxydé vers -OH, -CHO, -CH₂OH et/ou -COOH.

64. Procédé selon l'une des revendications 58 à 63, caractérisé en ce qu'il comporte l'étape de soumettre le composé oxydé à une ou plusieurs étapes additionnelles.

65. L'utilisation du matériau selon l'une des revendications 1 à 56 en tant que catalyseur (par exemple dans une réaction redox), un matériau d'échange d'ion ou un absorbant.

66. L'utilisation selon la revendication 65, caractérisée en ce que le matériau est utilisé en tant que catalyseur d'oxydation et le substrat comporte un demi alkylphényle, une double liaison C=C, un groupe hydroxy alcoolique ou un groupe carbonyle kétonique ou aldéhydique.

67. Matériau de tamis moléculaire contenant un actinide avec
(a) des atomes de phosphore ou des atomes d'un métal de transition de premier ou second rang ;
(b) de l'oxygène et/ou fluor, et optionnellement au moins un oxoanion ; ou
(c) de l'oxygène et/ou du fluor, et au moins une espèce de métal de transition oxo.

68. Matériau de tamis moléculaire ayant une structure consistant essentiellement en un actinide en combinaison avec (i) du fluor ou (ii) de l'oxygène et un oxoanion, la structure définissant des pores contenant des espèces de gabarit et optionnellement de l'eau.

69. Matériau selon la revendication 68, caractérisé en ce que l'oxoanion est un phosphore ou un métal de transition oxoanion.
